(19) Europäisches Patentamt
European Patent Office
Office européen des brevets

(11) **EP 3 101 464 B1**

(12) **EUROPÄISCHE PATENTSCHRIFT**

(45) Veröffentlichungstag und Bekanntmachung des Hinweises auf die Patenterteilung:
**12.09.2018 Patentblatt 2018/37**

(51) Int Cl.:
*G02F 1/01* *(2006.01)*    *G02B 1/00* *(2006.01)*

(21) Anmeldenummer: **15170348.5**

(22) Anmeldetag: **02.06.2015**

(54) **VORRICHTUNG MIT SCHALTBAREN CHIRALEN OPTISCHEN EIGENSCHAFTEN, VORRICHTUNG ZUR POLARISATIONSMODULATION, SOWIE DEREN VERWENDUNG**

DEVICE WITH SWITCHABLE CHIRAL OPTICAL PROPERTIES, DEVICE FOR POLARIZATION MODULATION, AND THEIR USE

DISPOSITIF AYANT DES CARACTÉRISTIQUES OPTIQUES CHIRALES COMMUTABLES, DISPOSITIF DE MODULATION DE POLARISATION, ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.12.2016 Patentblatt 2016/49**

(73) Patentinhaber: **Baden-Württemberg Stiftung gGmbH**
**70174 Stuttgart (DE)**

(72) Erfinder:
 • **Giessen, Harald**
 **67297 Marnheim (DE)**
 • **Yin, Xinghui**
 **70178 Stuttgart (DE)**

(74) Vertreter: **Kordel, Mattias et al**
**Gleiss Große Schrell und Partner mbB**
**Patentanwälte Rechtsanwälte**
**Leitzstrasse 45**
**70469 Stuttgart (DE)**

(56) Entgegenhaltungen:
 • TUN CAO ET AL: "Strongly tunable circular dichroism in gammadion chiral phase-change metamaterials", OPTICS EXPRESS, VOL. 16, NO. 7, PP. 4479-4486 (2008), Bd. 21, Nr. 23, 18. November 2013 (2013-11-18), Seite 27841, XP055212338, ISSN: 2161-2072, DOI: 10.1364/OE.21.027841
 • XINGHUI YIN ET AL: "Interpreting Chiral Nanophotonic Spectra: The Plasmonic Born-Kuhn Model", NANO LETTERS, Bd. 13, Nr. 12, 11. Dezember 2013 (2013-12-11), Seiten 6238-6243, XP055212349, ISSN: 1530-6984, DOI: 10.1021/nl403705k

EP 3 101 464 B1

**Beschreibung**

Die Erfindung betrifft eine Vorrichtung mit schaltbaren, chiralen optischen Eigenschaften, eine Einrichtung zur Polarisationsmodulation, und eine Verwendung einer Vorrichtung mit schaltbaren, chiralen optischen Eigenschaften oder einer Einrichtung zur Polarisationsmodulation.

Ansätze zur Verwirklichung von Vorrichtungen mit schaltbaren, chiralen optischen Eigenschaften existieren bisher im sichtbaren Spektralbereich (Kuzyk, A.; Schreiber, R.; Zhang, H.; Govorov, A.O.; Liedl, T.; Liu, N. Nat. Mater. 2014), und im Terahertz-Spektralbereich (Zhang, S.; Zhou, J.; Park, Y.-S.; Rho, J.; Singh, R.; Nam, S.; Azad, A.K.; Chen, H.-T.; Yin, X.; Taylor, A.J.; Zhang, X. Nat Commun. 2012, 3, 942). Für den sichtbaren Spektralbereich ist es demnach bekannt, die Händigkeit eines durch Selbstorganisation von DNA hergestellten, chiralen Metamaterials durch Zugabe von speziellen Verriegelungs-DNA-Strängen, welche die relative Position metallischer Nanostrukturen festlegen, zu ändern. Im Terahertz-Bereich ist es bekannt, eine größere Ladungsträgerdichte in Silizium bei Bestrahlung mit Terahertz-Strahlung zu nutzen, um leitende Verbindungen an verschiedenen Stellen zwischen metallischen Teilen des chiralen Metamaterials herzustellen. Diese bekannten Ansätze erlauben es nicht oder nur in beschränktem Umfang, die Eigenschaften einer solchen Vorrichtung auf einen gewünschten Wellenlängenbereich abzustimmen. Weiterhin sind diese Ansätze jeweils auf den sichtbaren beziehungsweise auf den Terahertz-Spektralbereich beschränkt. Beispielsweise ist es im mittleren Infrarotbereich nicht möglich, DNA-Selbstorganisation zur Schaltung chiraler optischer Eigenschaften einzusetzen, da die verwendeten, kolloidalen Nanopartikel nicht groß genug synthetisiert werden können, um plasmonische Resonanzen im mittleren Infrarotbereich zu erhalten. Auch das aus dem Terahertz-Bereich bekannte Schaltkonzept steht im mittleren Infrarotbereich nicht zur Verfügung, da die Photonenenergien hier kleiner sind als die Bandlücke von Silizium, sodass keine leitenden Verbindungen durch Bestrahlung hergestellt werden können. Ein zusätzlicher Nachteil insbesondere der DNA-basierten Methode ist, dass sie sehr langsam ist und insbesondere ungefähr eine halbe Stunde braucht, um von einer Händigkeit der chiralen Antwort zur anderen zu schalten.

Der Erfindung liegt die Aufgabe zugrunde, eine Vorrichtung mit schaltbaren chiralen optischen Eigenschaften, eine Einrichtung zur Polarisationsmodulation und eine Verwendung einer solchen Vorrichtung oder einer solchen Einrichtung zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem eine Vorrichtung mit schaltbaren, chiralen optischen Eigenschaften geschaffen wird, welche eine erste chirale Anordnung aufweist, wobei die erste chirale Anordnung eine erste Anordnungslage mit wenigstens einer ersten Nanostruktur und eine zweite Anordnungslage mit wenigstens einer zweiten Nanostruktur aufweist, wobei die erste Nanostruktur und die zweite Nanostruktur so relativ zueinander angeordnet sind, dass die Anordnung chiral ausgebildet ist, wobei zwischen der ersten Anordnungslage und der zweiten Anordnungslage ein Schaltmaterial mit schaltbaren dielektrischen Eigenschaften angeordnet ist, und auf der ersten chiralen Anordnung eine zweite chirale Anordnung angeordnet ist, die frei ist von einem Schaltmaterial.

Die Vorrichtung weist Vorteile gegenüber dem Stand der Technik auf. Insbesondere weist die Vorrichtung bevorzugt einen einfachen und auch einfach und kostengünstig herstellbaren Schichtaufbau aus der ersten Anordnungslage, einer Schicht des Schaltmaterials, und der zweiten Anordnungslage auf, wobei die Vorrichtung planar ausgebildet und sehr dünn sein kann. Zusätzlich oder alternativ ermöglicht die Vorrichtung eine Abstimmung der chiralen Antwort in einem weiten Wellenlängenbereich, wobei die Abstimmung insbesondere durch spezifische Wahl der eingesetzten Nanostrukturen und/oder des Schaltmaterials erreicht werden kann. Es können insbesondere das Material, die Größe und/oder die Geometrie der Nanostrukturen variiert werden, um die Wellenlänge einer chiralen optischen Antwort der Vorrichtung abzustimmen. Dabei bestehen keine grundsätzlichen Einschränkungen bezüglich eines bestimmten Wellenlängenbereichs. Insbesondere ist es möglich, die hier vorgeschlagene Vorrichtung auch im mittleren Infrarotbereich einzusetzen und auf diesen Spektralbereich abzustimmen. Das Schaltmaterial ist sehr schnell, insbesondere auf ultraschnellen Zeitskalen, schaltbar. Je nach dem angewendeten Schaltprinzip ist es möglich, das Schaltmaterial in Hinblick auf seine dielektrischen Eigenschaften und damit die Vorrichtung insgesamt in Hinblick auf ihre chiralen optischen Eigenschaften in wenigen Femtosekunden oder in wenigen Pikosekunden zu schalten. Die Vorrichtung ist darüber hinaus mechanisch sehr robust, da sie keinerlei freistehende oder bewegliche Teile benötigt. Vielmehr kann die gesamte Vorrichtung als robustes und kompaktes, mehrlagiges Schichtsystem verwirklicht sein.

Dass die Vorrichtung schaltbar ist, bedeutet insbesondere, dass sie zwischen einem ersten Schaltzustand und einem zweiten Schaltzustand - und vorzugsweise zurück, also bevorzugt reversibel - geschaltet werden kann.

Unter dem Begriff "chirale optische Eigenschaften" wird insbesondere verstanden, dass die Vorrichtung bei Bestrahlung mit Licht verschiedener Polarisation, insbesondere linearer oder zirkularer, insbesondere rechts- oder linkszirkularer Polarisation, verschiedene optische Antworten aufweist. Unter einer optischen Antwort wird dabei insbesondere eine Beeinflussung der eingestrahlten elektromagnetischen Strahlung im Sinne einer optischen Aktivität, mithin einer unterschiedlichen Brechung der einfallenden Strahlung bei verschiedener Polarisationsrichtung, und/oder eine unterschiedliche Absorption von Strahlung verschiedener Polarisation, insbesondere ein Zirkulardichroismus, verstanden.

Dass die optischen Eigenschaften schaltbar sind, bedeutet insbesondere, dass eine Wellenlänge, insbesondere ein Maximum einer optischen Bande, das heißt eine Peak-Wellenlänge, in deren Bereich eine chirale optische Antwort auftritt, bezüglich ihrer spektralen Position verändert werden kann, wobei diese Wellenlänge in einem ersten Schaltzustand einen ersten Wert und in einem zweiten Schaltzustand einen zweiten, von dem ersten Wert verschiedenen Wert aufweist. Unter einer schaltbaren chiralen optischen Eigenschaft wird auch eine schaltbare optische Aktivität und/oder ein schaltbarer Zirkulardichroismus verstanden, wobei insbesondere die Händigkeit der optischen Antwort, das heißt die Wirkung auf elektromagnetische Strahlung verschiedener Polarisation, geändert, insbesondere vertauscht oder invertiert werden kann. Dabei ist es insbesondere möglich, dass die Vorrichtung in einem ersten Schaltzustand elektromagnetische Strahlung einer ersten zirkularen Polarisation transmittiert und Licht einer zweiten zirkularen Polarisation absorbiert, wobei die Vorrichtung in einem zweiten Schaltzustand elektromagnetische Strahlung der zweiten zirkularen Polarisation transmittiert und zugleich elektromagnetische Strahlung der ersten zirkularen Polarisation absorbiert.

Unter einer Nanostruktur wird eine geometrische Anordnung eines bestimmten Materials mit bestimmter Geometrie bezeichnet, die zumindest in einer Richtung eine Abmessung auf der Nanometerskala, insbesondere einige Nanometer bis einige 100 nm, aufweist. Vorzugsweise weist die Nanostruktur in jeder Richtung eine Abmessung auf der Nanometerskala auf. Bevorzugt weist die Vorrichtung Nanostrukturen auf, welche ein plasmonisches Material, insbesondere ein Metall, aufweisen oder aus einem plasmonischen Material, insbesondere einem Metall, bestehen. Insbesondere ist es möglich, dass die Nanostrukturen Gold aufweisen oder aus Gold bestehen. Auch Aluminium und/oder Titannitrid sowie dielektrische hochbrechende Materialien, die Mieresonanzen aufweisen, kommen als Material für die Nanostrukturen infrage.

Wenigstens eine erste Nanostruktur der ersten Anordnungslage und wenigstens eine zweite Nanostruktur der zweiten Anordnungslage sind vorzugsweise in einer Nahfeld-Anordnung zueinander angeordnet. Insbesondere ist bevorzugt jeder ersten Nanostruktur eine zweite Nanostruktur zugeordnet, wobei einander zugeordnete erste und zweite Nanostrukturen miteinander ein so genanntes plasmonisches Dimer bilden. Durch die Nahfeld-Anordnung oder die Anordnung als plasmonisches Dimer sind die beiden, einander zugeordneten Nanostrukturen elektronisch miteinander gekoppelt, sodass sie gemeinsam eine plasmonische Anordnung mit plasmonischer Resonanzfrequenz bilden. Aufgrund der chiralen Anordnung der Nanostrukturen ist auch die optische Antwort der Anordnung der beiden Nanostrukturen chiral, die Anordnung weist also insbesondere eine optische Aktivität und/oder einen Zirkulardichroismus auf. Besonders bevorzugt überlappen die einander zugeordneten ersten und zweiten Nanostrukturen zumindest bereichsweise entlang einer bestimmten Richtung gesehen, wobei sie sich jedoch nicht berühren, sondern entlang derselben Richtung gesehen voneinander beabstandet sind.

Unter dem Begriff "Nahfeld" wird hier insbesondere eine Umgebung um eine Nanostruktur verstanden, in welcher (noch) keine Ablösung oder Abstrahlung eines Strahlungsfelds erfolgt. Insbesondere werden Eigenschaften einer elektromagnetischen Welle im Nahfeld mit dem Abstand $r$ von Polynomen $r^{-n}$ mit $n>1$, insbesondere mit hoher Ordnung $n$, beschrieben. Im Gegensatz dazu reduziert sich im Fernfeld, bei großem Abstand von der betrachteten Nanostruktur, die Beschreibung auf die erste Ordnung $n=1$, also auf eine Abhängigkeit von $1/r$, welche alle anderen Terme dominiert.

Die zweite Anordnungslage ist vorzugsweise parallel zu der ersten Anordnungslage ausgerichtet. Insbesondere sind die erste Anordnungslage und die zweite Anordnungslage als parallel zueinander orientierte Schichten ausgebildet. Das Schaltmaterial ist vorzugsweise ebenfalls schichtförmig angeordnet und - parallel zu der ersten und zweiten Anordnungslage - zwischen diesen angeordnet.

Es ist aber auch ein Ausführungsbeispiel möglich, bei welchem das Schaltmaterial nicht schichtförmig, sondern lokal begrenzt zwischen einander zugeordneten ersten und zweiten Nanostrukturen, insbesondere in einem Überlappungsbereich zwischen einander zugeordneten ersten und zweiten Nanostrukturen, in welchem sich diese überlappen, vorgesehen ist. Es hat sich herausgestellt, dass eine solche Anordnung des Schaltmaterials lokal zwischen den einander paarweise zugeordneten Nanostrukturen und insbesondere in deren Überlappungsbereich hinreichend ist, um die schaltbaren, chiralen optischen Eigenschaften für die Vorrichtung darzustellen.

Bei einem bevorzugten Ausführungsbeispiel sind verschiedene, verschiedenen Paaren von ersten und zweiten Nanostrukturen zugeordnete Schaltmaterial-Bereiche unabhängig voneinander schaltbar, insbesondere ansteuerbar. Dadurch ist es möglich, die chiralen optischen Eigenschaften der Vorrichtung lokal insbesondere separat und unabhängig zu schalten. Dabei ist es insbesondere möglich, eine pixelweise chiral optisch schaltbare Vorrichtung zu realisieren.

Unter dem Begriff "chiral" wird die Eigenschaft verstanden, dass ein Objekt nicht durch eine Drehung im Raum in sein Spiegelbild überführt werden kann. Diese Eigenschaft wird auch als Händigkeit bezeichnet, weil es sich beispielsweise bei einer Hand um ein in diesem Sinne chirales Objekt handelt. Es ist nicht möglich, eine linke Hand durch Drehung im Raum in eine rechte Hand zu überführen. Dabei stellt die rechte Hand das Spiegelbild der linken Hand dar.

Es ist möglich, dass die erste Anordnungslage für sich genommen chiral ausgebildet ist. Alternativ oder zusätzlich ist es möglich, dass die zweite Anordnungslage für sich genommen chiral ausgebildet ist. Wichtig ist, dass die wenigstens eine erste Nanostruktur der ersten Anordnungslage relativ zu der zweiten Nanostruktur der wenigstens einen zweiten Anordnungslage so angeordnet ist, dass die Anordnung jedenfalls insgesamt chiral ausgebildet ist. Dabei ist es ohne weiteres möglich, zwei Nanostrukturen derart zueinander im Raum anzuordnen, dass diese Anordnung nicht durch eine Drehung im Raum in ihr Spiegelbild überführt werden kann. Die Anordnung ist dann insgesamt chiral ausgebildet.

Es ist möglich, dass die erste Nanostruktur und die zweite Nanostruktur identisch ausgebildet sind, insbesondere eine identische Geometrie und/oder ein identisches Material aufweisen. Alternativ ist es auch möglich, dass sich die erste und die zweite Nanostruktur in wenigstens einer Eigenschaft unterscheiden. Auch wenn die erste und die zweite Nanostruktur identisch ausgebildet sind, ist es ohne weiteres möglich, sie relativ zueinander so im Raum anzuordnen, dass eine insgesamt chirale Anordnung entsteht.

Besonders bevorzugt werden die erste und die zweite Nanostruktur so relativ zueinander angeordnet, dass ein sogenanntes plasmonisches Dimer vom Born-Kuhn-Typ entsteht. Solche plasmonisch aktiven, chiralen Dimere sind beispielsweise in folgenden Veröffentlichungen beschrieben: Yin, X.; Schäferling, M.; Metzger, B.; Giessen, H. Nano Lett. 2013, 13, 6238-6243; Auguié, B.; Lorenzo Alonso-Gomez, J.; Guerrero-Martínez, A.; Liz-Marzán, L.M. J Phys Chem Lett 2011, 2, 846-851; Svirko, Y; Zheludev, N.; Osipov, M. Applied Physics Letters 2001, 78, 498-498. Allerdings ist das plasmonische chirale Dimer in der vorliegenden Vorrichtung derart modifiziert, dass zwischen den beiden Monomeren des Dimers das Schaltmaterial angeordnet ist, beziehungsweise indem die beiden Monomere des Dimers durch das Schaltmaterial voneinander beabstandet sind. Dies hat den zweifachen Vorteil, einerseits eine optimale Interaktion zwischen den Nanostrukturen zu gewährleisten, weil das Schaltmaterial im Bereich der Nahfeld-Kopplung der Nanostrukturen angeordnet werden kann, und andererseits eine vereinfachte Herstellung zu ermöglichen, weil kein zusätzlicher Lithographie-Schritt notwendig ist.

Unter dem Begriff "schaltbare dielektrische Eigenschaften" wird insbesondere verstanden, dass das Schaltmaterial in Hinblick auf seine Dielektrizitätskonstante schaltbar ist.

Es wird insbesondere ein Ausführungsbeispiel der Vorrichtung bevorzugt, das sich dadurch auszeichnet, dass das Schaltmaterial - vorzugsweise reversibel - zwischen einem ersten Schaltzustand, in welchem eine Dielektrizitätskonstante des Schaltmaterials einen ersten Wert aufweist, und einem zweiten Schaltzustand, in welchem die Dielektrizitätskonstante des Schaltmaterials einen zweiten, von dem ersten Wert verschiedenen Wert aufweist, schaltbar ist. Die chiralen optischen Eigenschaften der hier vorgeschlagenen Vorrichtung basieren im Wesentlichen auf plasmonischen Resonanzen der verwendeten Nanostrukturen. Dabei wird unter einer plasmonischen Resonanz eine kollektive Schwingung von Oberflächenelektronen verstanden, wobei eine plasmonische Resonanz einer Nanostruktur insbesondere durch spezifische Wahl des Materials und der konkreten Geometrie der Nanostruktur in einem weiten Wellenlängenbereich abstimmbar ist. Darüber hinaus ist eine plasmonische Resonanz aber auch sehr empfindlich auf die dielektrischen Umgebungsbedingungen im Nahfeld der Nanostruktur. Durch Schalten der Dielektrizitätskonstante des Schaltmaterials ist es daher möglich, die plasmonische Resonanz der Nanostrukturen der chiralen Anordnung zu verändern und damit eine Peak-Wellenlänge der chiralen optischen Eigenschaften der Vorrichtung bezüglich ihrer spektralen Position zu verschieben. Dies ist sehr schnell und vorzugsweise reversibel möglich.

Ein Übergang zwischen dem ersten Schaltzustand und dem zweiten Schaltzustand des Schaltmaterials ist vorzugsweise thermisch, optisch und/oder elektrisch induzierbar. Dabei ist das Schaltmaterial vorzugsweise optisch in wenigen Femtosekunden und elektrisch in wenigen Pikosekunden schaltbar.

Vorzugsweise ist das Schaltmaterial in eine Mehrzahl von Schaltzuständen schaltbar, wobei der zuvor beschriebene erste Schaltzustand und der zuvor beschriebene zweite Schaltzustand Extremalzustände darstellen, wobei mindestens ein weiterer Schaltzustand, vorzugsweise eine Mehrzahl weiterer Schaltzustände zwischen dem ersten und dem zweiten Schaltzustand realisiert werden kann/können. In diesen Zwischenzuständen nimmt die Dielektrizitätskonstante des Schaltmaterials vorzugsweise Werte an, welche zwischen den Werten des ersten Schaltzustands und des zweiten Schaltzustands liegen. Besonders bevorzugt ist das Schaltmaterial in einem Kontinuum von Schaltzuständen zwischen dem ersten und dem zweiten Schaltzustand schaltbar. Eine Mehrzahl von Schaltzuständen kann beispielsweise bei einem Schaltmaterial verwirklicht werden, welches in einem ersten Schaltzustand eine amorphe Phase und einem zweiten Schaltzustand eine kristalline Phase aufweist. Die Kristallisation findet in dem Schaltmaterial als Nukleationsprozess statt, sodass insbesondere homogen verteilte, kleine Kristallite Keime für ein nachfolgendes Kristallwachstum bilden, wobei schließlich von lokal homogenen Zentren ausgehend wachsende Kristalle zu einer insgesamt homogenen Kristallstruktur übergehen. Dabei existieren eine Vielzahl intermediäre Kristallisationsschritte mit fortschreitender Kristallisation, wobei jeder solche Kristallisationsschritt in sich selbst stabil ist, und wobei das Schaltmaterial in jedem dieser Kristallisationsschritte eine mittlere dielektrische Konstante aufweist, die beispielsweise gemäß der Maxwell-Garnett-Theorie bestimmt werden kann. Somit können die dielektrischen Umgebungsbedingungen für die Nanostrukturen insbesondere quasi-kontinuierlich oder kontinuierlich zwischen dem ersten Schaltzustand und dem zweiten Schaltzustand durchgestimmt werden, wobei auch die Peak-Wellenlänge der chiralen optischen Eigenschaften der Vorrichtung in ihrer spektralen Position insbesondere quasi-kontinuierlich oder kontinuierlich verschoben werden kann.

Es wird ein Ausführungsbeispiel der Vorrichtung bevorzugt, das sich dadurch auszeichnet, dass zwischen der ersten Anordnungslage und dem Schaltmaterial eine Schutzlage angeordnet ist. Alternativ oder zusätzlich ist bevorzugt zwischen dem Schaltmaterial und der zweiten Anordnungslage eine Schutzlage angeordnet. Eine solche Schutzlage schützt das Schaltmaterial vor Degradation oder Zersetzung, insbesondere vor Oxidation und/oder vor Diffusion des Materials der Nanostrukturen, beispielsweise Gold, in das Schaltmaterial hinein während des Schaltprozesses. Üblicherweise werden solche Schutzlagen vermieden, um einen direkten Berührungskontakt zwischen dem dielektrischen Material und den plasmonischen Nanostrukturen zu gewährleisten und so die Interaktion der Nahfelder der Nanostrukturen im Bereich des dielektrischen Materials zu maximieren. Erfindungsgemäß ist jedoch erkannt worden, dass bei der hier vorgeschlagenen Vorrichtung gleichwohl Schutzlagen angewendet werden können, ohne die Nahfeld-Interaktion zwischen den Nanostrukturen wesentlich zu behindern. Der Grund dafür ist, dass die gewählte Dimer-Konfiguration in einer hohen Feldverstärkung zwischen den Nanostrukturen resultiert, sodass das Nahfeld hier stärker ist als an einem Ende einer einzelnen Nanostruktur. Es ist daher möglich, den Vorteil von Schutzlagen zum Schutz des Schaltmaterials zu nutzen, ohne die Effizienz der Anordnung der ersten und zweiten Nanostruktur relativ zueinander zu beeinträchtigen.

Die wenigstens eine Schutzlage weist vorzugsweise ein anorganisches Material auf oder besteht aus einem anorganischen Material. Insbesondere wird eine Anordnung von Zinksulfid und Siliziumdioxid ($ZnS/SiO_2$) als Schutzlage bevorzugt.

Es wird ein Ausführungsbeispiel der Vorrichtung bevorzugt, das sich dadurch auszeichnet, dass die erste und die zweite Anordnungslage eine Mehrzahl von Nanostrukturen aufweisen. Bevorzugt weist sowohl die erste Anordnungslage eine Mehrzahl von ersten Nanostrukturen auf, wobei zugleich die zweite Anordnungslage eine Mehrzahl von zweiten Nanostrukturen aufweist. Dabei ist bevorzugt jeweils eine erste Nanostruktur der ersten Anordnungslage paarweise einer zweiten Nanostruktur der zweiten Anordnungslage zugeordnet, sodass die ersten und zweiten Nanostrukturen paarweise eine plasmonische Dimer-Anordnung - insbesondere vom Born-Kuhn-Typ - verwirklichen. Insgesamt weist die chirale Anordnung so eine Mehrzahl plasmonischer Dimer-Anordnungen auf. Insbesondere ist die chirale Anordnung als sogenanntes Metamaterial ausgebildet. Dabei wird unter einem Metamaterial eine künstlich hergestellte Struktur verstanden, welche Substrukturen aus elektrisch oder magnetisch wirksamen Materialien, hier konkret die Mehrzahl von Dimer-Anordnungen aus den ersten und zweiten Nanostrukturen, aufweist. Dabei können die einzelnen Substrukturen in Form von Zellen oder Superzellen, oder auch als Einzelelemente angeordnet sein. Typischerweise weist ein solches Metamaterial eine Durchlässigkeit für elektrische und magnetische Felder, insbesondere eine Permittivität und Permeabilität, auf, welche von in der Natur üblichen Werten abweicht. Dabei können Metamaterialien mit maßgeschneiderten optischen Eigenschaften realisiert werden. Durch Ausgestaltung der Anordnung als Metamaterial kann eine sehr hohe Effizienz der Vorrichtung mit ausgeprägten chiralen optischen Eigenschaften verwirklicht werden. Die Nanostrukturen sind innerhalb der ersten und/oder innerhalb der zweiten Anordnungslage vorzugsweise periodisch angeordnet. Es ist auch möglich, dass die Nanostrukturen innerhalb der ersten Anordnungslage und/oder innerhalb der zweiten Anordnungslage aperiodisch angeordnet sind. Dabei hat eine periodische Anordnung den Vorteil einer besonders einfachen Herstellbarkeit. Eine aperiodische Anordnung hat den Vorteil, dass sogenannte Rayleigh-Anomalien unterdrückt werden können. Hierzu genügt eine leichte Abweichung von einer periodischen Anordnung, keinesfalls bedarf es also einer völlig chaotischen Anordnung der Nanostrukturen.

Es wird auch ein Ausführungsbeispiel der Vorrichtung bevorzugt, das sich dadurch auszeichnet, dass wenigstens eine Nanostruktur der ersten und/oder der zweiten Anordnungslage in eine Deckschicht eingebettet ist. Vorzugsweise sind alle Nanostrukturen der ersten und/oder der zweiten Anordnungslage in eine Deckschicht eingebettet. Die Deckschicht hat dabei den Vorteil, die Nanostrukturen zu schützen, und dient zugleich bevorzugt als Planarisierungsschicht, welche eine ebene Auflagefläche für eine nächstfolgende Schicht, insbesondere das Schaltmaterial, oder eine über der zweiten Anordnungslage oder unter der ersten Anordnungslage angeordnete Schicht, bereitstellt. Als Deckschicht wird vorzugsweise ein Polymer gewählt, besonders bevorzugt ein Spin-on-Polymer, insbesondere PC403.

Es wird ein Ausführungsbeispiel der Vorrichtung bevorzugt, das sich dadurch auszeichnet, dass das Schaltmaterial als Phasenwechselmaterial ausgebildet ist. Dabei ist der erste Schaltzustand des Materials einer ersten Phase zugeordnet, und der zweite Schaltzustand ist einer zweiten Phase zugeordnet. Ein solches Phasenwechselmaterial hat sich als hochgradig geeignet herausgestellt, um eine schnelle und vorzugsweise reversible Schaltbarkeit zwischen einer ersten und einer zweiten Phase und damit einem ersten und einem zweiten Schaltzustand zu bewirken. Dabei ist es möglich, dass das Phasenwechselmaterial bevorzugt in der ersten Phase amorph und in der zweiten Phase kristallin vorliegt. Dabei unterscheiden sich bevorzugt Werte der Dielektrizitätskonstante des Schaltmaterials zwischen der ersten und der zweiten Phase deutlich. Besonders bevorzugt wird ein Phasenwechselmaterial verwendet, welches eine Chalkogenid-Verbindung aufweist oder aus einer Chalkogenid-Verbindung besteht. Solche Chalkogenid-Verbindungen sind reproduzierbar von einer ersten, amorphen Phase in eine zweite, kristalline Phase - und reversibel zurück - schaltbar, wobei sich die Werte der Dielektrizitätskonstante in den beiden Phasen deutlich unterscheiden. Besonders bevorzugt wird als Schaltmaterial das Phasenwechselmaterial GST-326 verwendet, welches eine Germanium-Antimon-Tellur-Verbindung aufweist oder aus einer solchen Verbindung besteht, insbesondere mit der Summenformel $Ge_3Sb_2Te_6$. Dieses Material wird beispielsweise zur optischen Datenspeicherung auf DVDs eingesetzt und weist herausragende elektro-optische Eigenschaften auf, welche es als Material für optische Anzeigeeinrichtungen mit niedriger Energie und hohem Kontrast geeignet erscheinen lassen. Dabei ist dieses Material von einer ersten, amorphen Phase in eine zweite, kristalline Phase schaltbar, wobei die Dielektrizitätskonstante oder relative Permittivität in der ersten, amorphen Phase einen Wert von 3,5+0,01i und in der kristallinen Phase einen Wert von 6,5+0,06i im mittleren Infrarotbereich (4 bis 5 μm) aufweist. Dieser große Unterschied in den Werten der Dielektrizitätskonstante in den beiden Phasen führt zu einem großen spektralen Schieben der Peak-Wellenlänge der optischen Antwort der schaltbaren Vorrichtung. Zugleich ist es möglich, das Material GST-326 thermisch, optisch oder elektrisch zu schalten, wobei insbesondere beim optischen und elektrischen Schalten sehr schnelle Schaltzeiten, insbesondere von wenigen Femtosekunden im optischen Fall und von wenigen Pikosekunden im elektrischen Fall, verwirklicht werden können.

Es wird ein Ausführungsbeispiel der Vorrichtung bevorzugt, das sich dadurch auszeichnet, dass die wenigstens eine erste Nanostruktur als Nanostab ausgebildet ist. Alternativ oder zusätzlich ist die wenigstens eine zweite Nanostruktur als Nanostab ausgebildet. Die Form von Nanostäben hat sich als besonders geeignet insbesondere zur Herstellung plasmonischer Dimere mit chiralen optischen Eigenschaften herausgestellt. Bevorzugt ist ein erster Nanostab der ersten Anordnungslage - in einer gedachten Ebene der Anordnung gesehen - senkrecht zu einem zweiten Nanostab der zweiten Anordnungslage orientiert, wobei der erste Nanostab und der zweite Nanostab vertikal versetzt zueinander angeordnet sind, wobei sie - in Draufsicht gesehen - überlappende Enden aufweisen. Unter einer gedachten Ebene der Anordnung wird dabei insbesondere eine Ebene verstanden, entlang der sich die Anordnungslagen einerseits und die Schicht des Schaltmaterials andererseits erstrecken. Eine vertikale Richtung steht dabei senkrecht auf der gedachten Ebene und bildet insbesondere eine Stapelrichtung der Schichten. In Draufsicht blickt der Betrachter entlang der vertikalen Richtung auf die gedachte Ebene. Der erste und der zweite Nanostab sind also insbesondere über Eck angeordnet, dabei vertikal zueinander versetzt, insbesondere durch das Schaltmaterial voneinander beabstandet, und überlappen mit jeweils einem Ende. Insbesondere überlappt also ein erstes Ende des ersten Nanostabs mit einem zweiten Ende des zweiten Nanostabs. Dabei sind die Nanostäbe im Bereich ihrer überlappenden Enden miteinander im Nahfeld gekoppelt. Eine solche Anordnung von Nanostäben hat sich als besonders geeignet erwiesen, um eine Anordnung mit chiralen optischen Eigenschaften bereitzustellen. Dabei zeigt sich auch, dass eine solche Anordnung zweier Nanostäbe chiral ist, weil sie sich nicht durch Drehung im Raum in ihr Spiegelbild überführen lässt. Da die Nanostäbe im Nahfeld zueinander angeordnet sind, wobei das Schaltmaterial im Nahfeld zwischen den beiden Nanostäben angeordnet ist, lässt sich eine plasmonische Resonanz der Dimer-Anordnung der beiden Nanostäbe durch Schalten der dielektrischen Eigenschaften des Schaltmaterials verändern.

Wie bereits angedeutet, sind die Nanostrukturen auf einen vorbestimmten Wellenlängenbereich für die chirale optische Antwort der Vorrichtung abgestimmt, insbesondere in Hinblick auf ihre Geometrie. Zusätzlich oder alternativ ist vorzugsweise das Schaltmaterial in seinen Eigenschaften auf den vorbestimmten Wellenlängenbereich abgestimmt. Insbesondere sind bevorzugt sowohl die Nanostrukturen als auch das Schaltmaterial auf den vorbestimmten Wellenlängenbereich und insbesondere aufeinander abgestimmt. So ist die Geometrie der Nanostrukturen bevorzugt so gewählt, dass deren plasmonische Resonanz in einem Transparenz-Fenster des Schaltmaterials liegt, sodass insbesondere eine von der Dimer-Anordnung der Nanostrukturen nicht absorbierte elektromagnetische Strahlung nicht etwa von dem Schaltmaterial absorbiert, sondern ebenfalls transmittiert wird.

Bei einem bevorzugten Ausführungsbeispiel weist ein Nanostab eine in der gedachten Ebene gemessene Länge von 660 nm, eine ebenfalls in der gedachten Ebene gemessene Breite von 40 nm, und eine senkrecht zu der gedachten Ebene gemessene Dicke von 50 nm auf. Mit einer solchen Geometrie sind die Nanostäbe insbesondere abgestimmt auf den mittleren Infrarotbereich für die chirale optische Antwort der Vorrichtung. Dabei liegt auch das Transparenz-Fenster des Schaltmaterials bevorzugt im mittleren Infrarotbereich. Beispielsweise liegt das Transparenz-Fenster von GST-326 im Bereich von 2,8 μm bis 5,5 μm, sowohl für die amorphe als auch für die kristalline Phase. Auf diese Weise kann - insbesondere auch durch geeignete Wahl der Schichtdicke des Schaltmaterials - gewährleistet werden, dass Absorptionsverluste in dem Schaltmaterial sehr viel kleiner sind als 1 %, und damit vernachlässigbar.

Es wird insbesondere ein Ausführungsbeispiel der Vorrichtung bevorzugt, das sich dadurch auszeichnet, dass die Anordnung eine Superzelle aufweist, die acht Nanostrukturen aufweist. Die Superzelle erstreckt sich dabei über die erste Anordnungslage und die zweite Anordnungslage und weist in jeder Anordnungslage jeweils vier Nanostrukturen auf, die entlang der Kanten eines Rechtecks, insbesondere eines Quadrats, angeordnet sind. Dabei sind die vier Nanostrukturen der ersten Anordnungslage spiegelbildlich zu den vier Nanostrukturen der zweiten Anordnungslage angeordnet, wobei sich die Spiegelebene senkrecht zu den Anordnungslagen, insbesondere senkrecht zu der gedachten Ebene, erstreckt. Im Übrigen sind die Rechtecke, insbesondere Quadrate, der Superzelle in den beiden Anordnungslagen deckungsgleich zueinander, insbesondere mit allen, einander entsprechenden Ecken paarweise überlappend angeordnet. Auf diese Weise umfasst die Superzelle vier Dimer-Anordnungen aus jeweils einer ersten Nanostruktur der ersten Anordnungslage und einer zweiten Nanostruktur der zweiten Anordnungslage, wobei die Dimer-Anordnungen innerhalb der Superzelle so angeordnet sind, dass sich ihre Monomere jeweils an den Ecken des Rechtecks, insbesondere des Quadrats, überlappen. Die hier beschriebene, konkrete geometrische Ausgestaltung hat sich als besonders günstig für die chiralen optischen Eigenschaften der Vorrichtung herausgestellt.

Die Superzelle weist vorzugsweise eine $C_4$-Symmetrie auf.

Vorzugsweise umfasst die Anordnung eine Vielzahl identischer Superzellen, die versetzt zueinander angeordnet sind, wobei es möglich ist, dass die Superzellen periodisch oder aperiodisch angeordnet sind. Dabei hat eine aperiodische Anordnung der Superzellen insbesondere den Vorteil, dass Rayleigh-Anomalien effizient unterdrückt werden können. Eine periodische Anordnung von Superzellen hat demgegenüber den Vorteil, besonders einfach herstellbar zu sein.

Erfindungsgemäße Ausführungsbeispiele der Vorrichtung zeichnen sich dadurch aus, dass auf der ersten chiralen Anordnung eine zweite chirale Anordnung angeordnet ist, wobei die zweite chirale Anordnung frei ist von einem Schaltmaterial. Besonders bevorzugt ist die zweite chirale Anordnung direkt und unmittelbar auf der zweiten Anordnungslage der ersten chiralen Anordnung angeordnet. Die erste chirale Anordnung ist durch das Schaltmaterial als aktive chirale Anordnung ausgebildet und bezüglich ihrer optischen Eigenschaften, insbesondere bezüglich einer Peak-Wellenlänge ihrer optischen Antwort, schaltbar. Die zweite chirale Anordnung, die frei ist von einem Schaltmaterial, also kein Schaltmaterial aufweist, ist demgegenüber als passive chirale Anordnung mit unveränderlichen chiralen optischen Eigenschaften ausgebildet. Die zweite chirale Anordnung ist vorzugsweise als Bias-Anordnung ausgebildet, welche eingerichtet ist, um die optische Antwort der Vorrichtung relativ zu der optischen Antwort der ersten chiralen Anordnung - insbesondere in Bezug auf eine Amplitude der chiralen optischen Antwort - zu verschieben. Vorzugsweise sind die erste chirale Anordnung und die zweite chirale Anordnung - insbesondere durch geeignete Wahl einer Schichtdicke von wenigstens einer Deckschicht einer der chiralen Anordnungen - so weit voneinander beabstandet, dass eine Nahfeld-Kopplung zwischen den chiralen Anordnungen vermieden wird. Insbesondere ist es möglich, dass die erste chirale Anordnung und die zweite chirale Anordnung - in vertikaler Richtung gesehen - um mehr als 200 nm voneinander versetzt angeordnet sind. Hierdurch wird gewährleistet, dass die Anwesenheit der jeweils anderen chiralen Anordnung eine betrachtete chirale Anordnung nicht stört und in ihren optischen Eigenschaften nicht verändert. Vielmehr verändert die Anordnung der zweiten chiralen Anordnung auf der ersten chiralen Anordnung nur die chirale optische Antwort der Gesamtvorrichtung, die sich dann als Summe der beiden chiralen optischen Antworten darstellen lässt.

Die zweite chirale Anordnung weist vorzugsweise ihrerseits eine erste chirale Anordnungslage mit wenigstens einer ersten Nanostruktur, insbesondere einer Mehrzahl erster Nanostrukturen, sowie eine zweite Anordnungslage mit wenigstens einer zweiten Nanostruktur, vorzugsweise eine Mehrzahl zweiter Nanostrukturen, auf. Dabei sind die erste und die zweite Nanostruktur so relativ zueinander angeordnet, dass die zweite chirale Anordnung chiral ist. Bis auf das Schaltmaterial, welches die zweite chirale Anordnung nicht aufweist, sind die erste und die zweite chirale Anordnung bevorzugt strukturell ähnlich oder identisch ausgebildet, wobei es möglich ist, dass sie sich in Hinblick auf die konkrete Geometrie der gewählten Nanostrukturen unterscheiden, um eine optimale Wellenlängenabstimmung zwischen den chiralen Anordnungen zu gewährleisten. Dabei ist insbesondere die Geometrie , besonders eine Länge, der Nanostrukturen der zweiten chiralen Anordnung so abgestimmt, dass deren chirale optische Antwort in einem selben Spektralbereich, vorzugsweise bei einer selben Peak-Wellenlänge, liegt wie die optische Antwort der ersten chiralen Anordnung. Eine Änderung der Geometrie kann dabei deswegen nötig sein, weil die dielektrische Umgebung der Nanostrukturen in der zweiten chiralen Anordnung durch die fehlende Schicht des Schaltmaterials anders ist als in der ersten chiralen Anordnung. Im Übrigen gilt aber bevorzugt alles, was zuvor für die erste chirale Anordnung erläutert wurde, auch für die zweite chirale Anordnung.

Es wird ein Ausführungsbeispiel der Vorrichtung bevorzugt, das sich dadurch auszeichnet, dass die zweite chirale Anordnung so ausgebildet ist, dass sie chirale optische Eigenschaften, insbesondere ein Zirkulardichroismus-Signal, bei einer gleichen Wellenlänge, insbesondere Peak-Wellenlänge, aufweist wie die erste chirale Anordnung, vorzugsweise in einem der Schaltzustände, insbesondere in dem ersten Schaltzustand. Weiterhin weist die zweite chirale Anordnung vorzugsweise im Vergleich zu der ersten chiralen Anordnung eine umgekehrte Händigkeit auf. Dies kann insbesondere erreicht werden, indem die plasmonischen Dimere der zweiten chiralen Anordnung spiegelbildlich zu den plasmonischen Dimeren der ersten chiralen Anordnung aufgebaut sind. Alternativ oder zusätzlich sind bevorzugt Superzellen der zweiten chiralen Anordnung spiegelbildlich zu den Superzellen der ersten chiralen Anordnung aufgebaut. Weiterhin weist die zweite chirale Anordnung vorzugsweise im Vergleich zu der ersten chiralen Anordnung ein Zirkulardichroismus-Signal - bevorzugt bei gleicher Peak-Wellenlänge - mit invertiertem Vorzeichen und halber Amplitude auf. Auf diese Weise ist es möglich, eine Vorrichtung mit schaltbarer Händigkeit der chiralen optischen Antwort, insbesondere des Zirkulardichroismus-Signals zu schaffen.

Die Funktionsweise der Vorrichtung ist dann insbesondere folgende: Die zweite chirale Anordnung weist ein Zirkulardichroismus-Signal mit invertiertem Vorzeichen und halber Amplitude bei einer gleichen Peak-Wellenlänge auf, wie beispielsweise die erste chirale Anordnung in dem ersten Schaltzustand des Schaltmaterials. Befindet sich das Schaltmaterial in dem ersten Schaltzustand, hat dies zur Folge, dass die Vorrichtung insgesamt in Summe ein Zirkulardichroismus-Signal aufweist, welches halb so groß ist wie das Zirkulardichroismus-Signal der ersten chiralen Anordnung für sich genommen. Das Zirkulardichroismus-Signal der gesamten Vorrichtung ist nämlich die Summe der beiden individuellen Zirkulardichroismus-Signale der beiden chiralen Anordnungen. Weist also die erste chirale Anordnung beispielsweise bei der Peak-Wellenlänge ein Zirkulardichroismus-Signal von 100 % auf, wobei die zweite chirale Anordnung bei der Peak-Wellenlänge ein Zirkulardichroismus-Signal von -50 % aufweist, so weist die Vorrichtung insgesamt in dem ersten Schaltzustand ein Zirkulardichroismus-Signal von 50 % auf. Wird nun das Schaltmaterial in den zweiten Schaltzustand geschaltet, verschiebt sich die plasmonische Resonanz der ersten chiralen Anordnung und damit deren Peak-Wellenlänge hinreichend weit von ihrer ursprünglichen spektralen Position, sodass die erste chirale Anordnung bei der Spektralposition der ursprünglichen Peak-Wellenlänge, welche weiterhin die Spektralposition der Peak-Wellenlänge der zweiten chiralen Anordnung ist, quasi kein oder nur ein vernachlässigbares Zirkulardichroismus-Signal aufweist. Somit weist nun in dem zweiten Schaltzustand die Vorrichtung insgesamt das Zirkulardichroismus-Signal der zweiten chiralen Anordnung auf, nämlich -50 %. Somit ist es durch Schalten des Schaltmaterials von dem ersten Schaltzustand in den zweiten Schaltzustand und zurück möglich, das Zirkulardichroismus-Signal der Vorrichtung bei gleicher Amplitude bezüglich seines Vorzeichens zu invertieren, beispielsweise von +50 % auf -50 % zu schalten. Somit wird insbesondere eine Vorrichtung bereitgestellt, bei welcher die Händigkeit einer chiralen optischen Antwort in einfacher und schneller Weise invertiert werden kann.

Eine Abstimmung der zweiten chiralen Anordnung auf die Peak-Wellenlänge der ersten chiralen Anordnung wird vorzugsweise durch eine Variation einer Länge der Nanostrukturen, insbesondere von Nanostäben, der zweiten chiralen Anordnung erreicht. Eine Abstimmung der Amplitude des Zirkulardichroismus-Signals der zweiten chiralen Anordnung auf die Amplitude des Zirkulardichroismus-Signals der ersten chiralen Anordnung wird vorzugsweise durch eine Variation des vertikalen Abstands der ersten Nanostruktur der zweiten chiralen Anordnung zu der zweiten Nanostruktur der zweiten chiralen Anordnung erreicht.

Unter einem Zirkulardichroismus-Signal wird eine - insbesondere wellenlängenabhängige - Größe verstanden, die als Differenz einer eine Transmission von rechtshändig zirkular polarisierter elektromagnetischer Strahlung darstellenden Größe abzüglich einer eine Transmission von linkshändig zirkular polarisierter elektromagnetischer Strahlung darstellenden Größe dargestellt werden kann. Dabei können die Transmissionswerte selbst in eine Formel zur Berechnung des Zirkulardichroismus-Signals eingehen, es ist aber auch möglich, eine hiervon abgeleitete Größe zu verwenden, beispielsweise Logarithmen der Transmissionsgrößen. Beispielsweise kann ein Zirkulardichroismus-Signal CD in folgender Weise definiert werden:

$$CD(\lambda) = 33(\log T_R(\lambda) - \log T_L(\lambda)) , \qquad (1)$$

wobei sich das Zirkulardichroismus-Signal CD in einfacher und für sich genommen bekannter Weise aus Transmissionsspektren für rechtshändig zirkular polarisierte Strahlung $T_R$ einerseits und linkshändig zirkular polarisierte Strahlung $T_L$ andererseits berechnen lässt.

Es wird auch ein Ausführungsbeispiel der Vorrichtung bevorzugt, das sich dadurch auszeichnet, dass die erste chirale Anordnung auf einem Substrat aufgebaut ist, das zumindest in einem vorbestimmten Wellenlängenbereich transparent ist. Auf diese Weise kann die erste chirale Anordnung - und bevorzugt zugleich auch die zweite chirale Anordnung - stabil und dauerhaft auf dem Substrat angeordnet werden, wobei dieses die optischen Eigenschaften der Vorrichtung bevorzugt nicht beeinträchtigt. Insbesondere ist der Wellenlängenbereich, in welchem das Substrat transparent ist, vorzugsweise abgestimmt auf den Wellenlängenbereich der chiralen optischen Eigenschaften der ersten chiralen Anordnung und vorzugsweise der zweiten chiralen Anordnung, insbesondere auf die Peak-Wellenlänge einer chiralen Antwort der Vorrichtung. Insbesondere wenn die Vorrichtung abgestimmt ist auf den mittleren Infrarot-Bereich, wird als Substrat bevorzugt Calciumfluorid, CaF$_2$, verwendet.

Es wird auch ein Ausführungsbeispiel der Vorrichtung bevorzugt, das sich dadurch auszeichnet, dass die erste chirale Anordnung ein Zirkulardichroismus-Signal bei einer Wellenlänge im Infrarotbereich, im Gigahertz-Bereich, im Terahertz-Bereich, im sichtbaren Bereich, und/oder im Ultraviolett-Bereich, aufweist. Dabei sind insbesondere die Nanostrukturen ohne weiteres durch Wahl ihres Materials und/oder ihrer Geometrie auf einen gewünschten Wellenlängenbereich abstimmbar. Zusätzlich oder alternativ ist vorzugsweise das Schaltmaterial auf den gewünschten Wellenlängenbereich abgestimmt. Insbesondere sind die Nanostrukturen und das Schaltmaterial aufeinander und auf den gewünschten Wellenlängenbereich abgestimmt. Die Vorrichtung kann sehr flexibel über einen weiten Frequenzbereich abgestimmt werden und in einem gewünschten Frequenzbereich schaltbare, chirale optische Eigenschaften aufweisen.

Besonders bevorzugt wird ein Ausführungsbeispiel der Vorrichtung, welches ein Zirkulardichroismus-Signal bei einer Peak-Wellenlänge im mittleren Infrarotbereich aufweist, vorzugsweise in einem Bereich von mindestens 4 µm bis höchstens 5 µm, besonders bevorzugt in einem Bereich von mindestens 4,15 µm bis 4,9 µm. Besonders bevorzugt ist die Peak-Wellenlänge der ersten chiralen Anordnung schaltbar von einer Position bei 4,15 µm auf eine Position bei 4,9 µm. Damit füllt die Vorrichtung insbesondere eine spektrale Lücke, die bisher bei der Bereitstellung von Vorrichtungen mit schaltbaren, chiralen optischen Eigenschaften besteht. Dies ist ohne weiteres möglich, weil die Vorrichtung über einen weiten Wellenlängenbereich hin abgestimmt werden kann.

Die Aufgabe wird schließlich auch gelöst, indem eine Einrichtung zur Polarisationsmodulation geschaffen wird, welche eine Vorrichtung nach einem der zuvor beschriebenen Ausführungsbeispiele aufweist. Dabei verwirklichen sich in Zusammenhang mit der Einrichtung die Vorteile, die bereits in Zusammenhang mit der Vorrichtung beschrieben wurden. Die Einrichtung ist bevorzugt eingerichtet zur Polarisationsmodulation im Hochfrequenzbereich. Insbesondere ist die Einrichtung bevorzugt eingerichtet zur Polarisationsmodulation im mittleren Infrarotbereich. Eine solche Einrichtung ist vorteilhaft insbesondere in Anwendungsbereichen der thermischen Bildgebung, in der polarisationsempfindlichen Detektion, in nanophotonischen Schaltkreisen, in der Datenspeicherung, und in der Stereo-Bildgebung, ganz besonders der 3D-Bildanzeige.

Dementsprechend gehört zur Erfindung auch eine Vorrichtung zur thermischen Bildgebung, welche eine entsprechende Einrichtung aufweist. Weiterhin gehört zur Erfindung eine Vorrichtung zur polarisationsempfindlichen Detektion, welche eine entsprechende Einrichtung aufweist. Weiterhin gehört zur Erfindung eine Vorrichtung zur Stereo-Bildgebung, insbesondere zur dreidimensionalen Bildanzeige, welche eine solche Einrichtung aufweist. Weiterhin gehört zur Erfindung auch ein nanophotonischer Schaltkreis mit einer solchen Einrichtung, und eine Datenspeicherungseinrichtung mit einer solchen Einrichtung.

Die Einrichtung kann auch verwendet werden, um optische, nanophotonische Schaltkreise zu verwirklichen, oder zur Datenspeicherung. Entsprechend werden auch hierzu vorgesehene Vorrichtungen bevorzugt, welche entsprechende Einrichtungen aufweisen.

Schließlich wird die Aufgabe auch gelöst, indem die Verwendung einer Vorrichtung nach einem der zuvor beschriebenen Ausführungsbeispiele, oder die Verwendung einer Einrichtung nach einem der zuvor beschriebenen Ausführungsbeispiele, zur thermischen Bildgebung, zur polarisationssensitiven Detektion, zur Stereo-Bildgebung, insbesondere zur 3D-Bildanzeige, in einem nanophotonischen Schaltkreis, und/oder zur Datenspeicherung geschaffen wird. Dabei verwirklichen sich die Vorteile, die bereits in Zusammenhang mit der Vorrichtung und der Einrichtung erläutert wurden.

Bei einem konkreten Ausführungsbeispiel der Vorrichtung ist es möglich, dass die erste Anordnungslage auf einem Calciumfluorid-Substrat ($CaF_2$) aufgebaut ist, wobei die erste Anordnungslage Nanostäbe mit einer in einer gedachten Ebene der Anordnungslage gemessenen Länge von 660 nm, einer in der gedachten Ebene gemessenen Breite von 40 nm und einer senkrecht zu der gedachten Ebene gemessenen Dicke von 50 nm aufweist. Eine Mehrzahl solcher Nanostäbe wird auf dem Substrat angeordnet. Darauf wird eine 60 nm dicke Planarisierungsschicht eines Spin-on-Polymers PC403 aufgebracht, sodass die Nanostäbe der ersten Anordnungslage in dem Polymer eingebettet sind. Darauf wird eine 10 nm dicke Schutzlage aus $ZnS/SiO_2$ aufgebracht, auf welche eine 50 nm dicke Schicht an Schaltmaterial, insbesondere GST-326, aufgebracht wird, auf welche wiederum eine 10 nm dicke Schutzlage von $ZnS/SiO_2$ aufgebracht wird. Auf diese Schutzlage werden die zweiten Nanostrukturen der zweiten Anordnungslage aufgebracht, welche vorzugsweise als identische Nanostäbe wie die Nanostrukturen der ersten Anordnungslage ausgebildet sind, wobei diese zweiten Nanostäbe relativ zu den ersten Nanostäben so ausgerichtet werden, dass sich insgesamt $C_4$-symmetrische Superzellen von chiralen Dimeren ergeben - wie dies bereits zuvor erläutert wurde. Diese Superzellen werden insgesamt bevorzugt aperiodisch über eine Fläche von 100 $\mu$m auf 100 $\mu$m angeordnet, um Rayleigh-Anomalien zu vermeiden. Die zweiten Nanostrukturen der zweiten Anordnungslage werden schließlich mit einer Deckschicht von 100 nm Dicke aus PC403 bedeckt, um die dielektrische Umgebung der chiralen Dimere zu symmetrisieren. Die Nanostrukturen bestehen vorzugsweise aus einem plasmonischen Material, beispielsweise aus Gold. Auch Aluminium, Titannitrid oder dielektrische Materialien mit hohem Brechungsindex, die Mieresonanzen aufweisen können, kommen als Material für die Nanostrukturen infrage.

Allgemein weist die Vorrichtung bevorzugt folgenden Aufbau auf: Auf einem Substrat wird die erste Anordnungslage mit einer Mehrzahl erster Nanostrukturen - eingebettet in eine Deckschicht - aufgebracht. Hierauf wird eine Schutzlage aufgebracht, auf die wiederum eine Schicht aus Schaltmaterial aufgebracht wird. Hierauf wird wiederum eine Schutzlage aufgebracht, auf welche dann die zweiten Nanostrukturen der zweiten Anordnungslage - eingebettet in eine Deckschicht - aufgebracht werden.

Die Vorrichtung wird vorzugsweise hergestellt, indem zunächst mittels Elektronenstrahl-Lithographie Markierungen auf dem Substrat angeordnet werden, sowie die ersten Nanostrukturen. Die Deckschicht wird als Spin-on-Polymer aufgebracht. Die Schutzlagen werden vorzugsweise durch DC-Magnetron-Sputtern aufgebracht. Auch das Schaltmaterial wird vorzugsweise mittels DC-Magnetron-Sputtern aufgebracht. In einem nächsten Elektronenstrahl-Lithographie-Schritt, der sich an den zuvor in der ersten Anordnungslage aufgebrachten Markierungen orientiert, werden - ausgerichtet relativ zu den ersten Nanostrukturen - die zweiten Nanostrukturen der zweiten Anordnungslage aufgebracht. Diese werden schließlich durch ein Spin-on-Verfahren mit einer Deckschicht versehen beziehungsweise in eine Deckschicht eingebettet.

Um die zweite chirale Anordnung auf die erste chirale Anordnung aufzubringen, wird bevorzugt in analoger Weise vorgegangen, wobei die zweite chirale Anordnung bevorzugt so abgestimmt wird, dass sie eine invertierte Händigkeit relativ zu der ersten chiralen Anordnung aufweist und entsprechend ein in Hinblick auf sein Vorzeichen invertiertes Zirkulardichroismus-Signal halber Amplitude bei gleicher Peak-Wellenlänge wie die erste chirale Anordnung in einem Schaltzustand. Dabei wird die zweite chirale Anordnung von der ersten chiralen Anordnung hinreichend beabstandet, um Nahfeld-Kopplungen zu vermeiden, wobei der Abstand zwischen der ersten chiralen Anordnung der zweiten chiralen Anordnung vorzugsweise mindestens 200 nm beträgt. Die Nanostrukturen der zweiten chiralen Anordnung werden so gewählt, dass das Zirkulardichroismus-Signal der zweiten chiralen Anordnung bei derselben Peak-Wellenlänge liegt wie das Zirkulardichroismus-Signal der ersten chiralen Anordnung in einem der beiden Schaltzustände des Schaltmaterials, vorzugsweise wie in dem ersten Schaltzustand. Dies ist beispielsweise der Fall, wenn die Nanostäbe der zweiten chiralen Anordnung - in der gedachten Ebene gemessen - eine Länge von 800 nm, eine in dieser Ebene gemessene Breite von 40 nm, und eine senkrecht zu der gedachten Ebene gemessene Dicke von 40 nm aufweisen. Die ersten Nanostäbe der ersten Anordnungslage der zweiten chiralen Anordnung werden von den zweiten Nanostäben der zweiten Anordnungslage der zweiten chiralen Anordnung vorzugsweise in vertikaler Richtung um 60 nm beabstandet. Im Übrigen werden - bis auf die Schutzlagen und das Schaltmaterial - vorzugsweise für die zweite chirale Anordnung die gleichen Materialien und der gleiche prinzipielle geometrische Aufbau gewählt wie für die erste chirale Anordnung. Allerdings ist es möglich, für die zweite chirale Anordnung eine periodische Anordnung von $C_4$-symmetrischen Superzellen - insbesondere mit einer Periodizität von 1800 nm - zu wählen, weil bereits der niedrige Refraktionsindex von PC403 die Ausbildung von Rayleigh-Anomalien im mittleren Infrarotbereich für die gewählte Periodizität verhindert.

Die Erfindung wird im Folgenden anhand der Zeichnung näher erläutert. Dabei zeigen:

Figur 1 eine schematische, teilweise weggeschnittene Darstellung eines ersten zum Verständnis der Erfindung nützlichen Beispiels einer Vorrichtung mit schaltbaren, chiralen optischen Eigenschaften;

Figur 2 eine schematische Detaildarstellung des ersten zum Verständnis der Erfindung nützlichen Beispiels der Vorrichtung;

Figur 3 eine schematische, diagrammatische Darstellung der Funktionsweise des ersten zum Verständnis der Erfindung nützlichen Beispiels der Vorrichtung;

Figur 4 eine schematische Darstellung eines erfindungsgemäßen ersten Ausführungsbeispiels der Vorrichtung, und

Figur 5 eine schematische, diagrammatische Darstellung der Funktionsweise des erfindungsgemäßen ersten Ausführungsbeispiels.

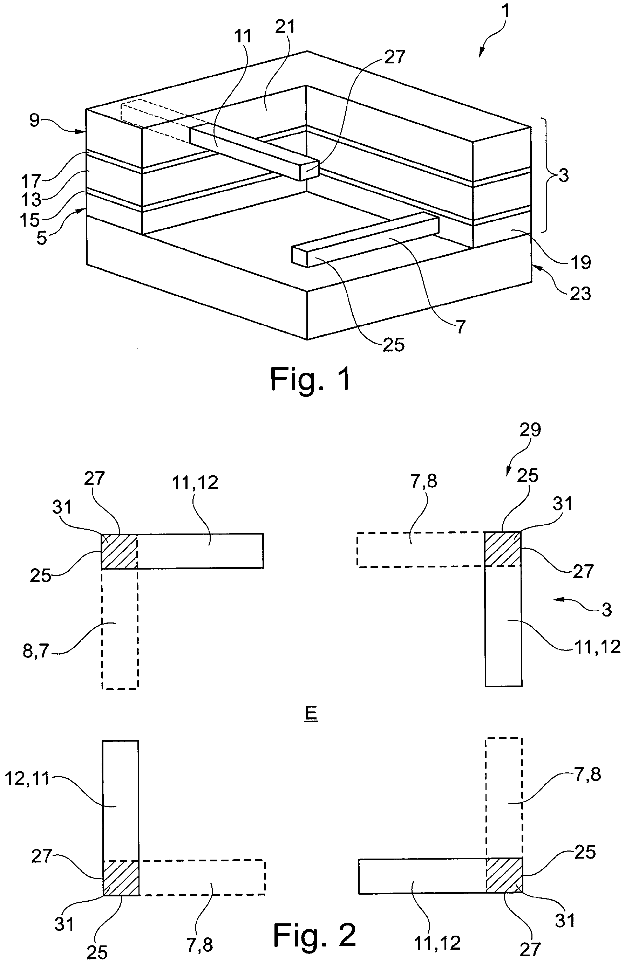

**Figur 1** zeigt eine teilweise weggeschnittene Detaildarstellung eines ersten zum Verständnis der Erfindung nützlichen Beispiels einer Vorrichtung 1 mit schaltbaren, chiralen optischen Eigenschaften. Die Vorrichtung 1 weist eine erste chirale Anordnung 3 auf, welche eine erste Anordnungslage 5 mit einer ersten Nanostruktur 7 und eine zweite, parallel zu der ersten Anordnungslage 5 ausgerichtete, zweite Anordnungslage 9 mit einer zweiten Nanostruktur 11 aufweist. Dabei sind die erste Nanostruktur 7 und die zweite Nanostruktur 11 so relativ zueinander angeordnet, dass die chirale Anordnung 3 chiral ist. Die chirale Anordnung 3 erhält ihre chirale Eigenschaft also insbesondere aus der Relativanordnung der ersten Nanostruktur 7 zu der zweiten Nanostruktur 11.

Zwischen der ersten Anordnungslage 5 und der zweiten Anordnungslage 9 ist ein Schaltmaterial 13 angeordnet, welches schaltbare dielektrische Eigenschaften aufweist. Das Schaltmaterial 13 ist insbesondere - vorzugsweise reversibel - zwischen einem ersten Schaltzustand, in dem eine Dielektrizitätskonstante des Schaltmaterials 13 einen ersten Wert aufweist, und einem zweiten Schaltzustand, in welchem die Dielektrizitätskonstante einen zweiten, von dem ersten Wert verschiedenen Wert aufweist, schaltbar. Ein Übergang zwischen dem ersten Schaltzustand und dem zweiten Schaltzustand ist vorzugsweise thermisch, optisch und/oder elektrisch, besonders bevorzugt sowohl thermisch, als auch optisch sowie elektrisch, induzierbar.

Wenigstens eine erste Nanostruktur 7 der ersten Anordnungslage 5 und wenigstens eine zweite Nanostruktur 11 der zweiten Anordnungslage 9 sind vorzugsweise in einer Nahfeld-Anordnung zueinander angeordnet. Insbesondere ist bevorzugt jeder ersten Nanostruktur 7 eine zweite Nanostruktur 11 zugeordnet, wobei einander zugeordnete erste und zweite Nanostrukturen 7, 11 miteinander ein so genanntes plasmonisches Dimer bilden.

Besonders bevorzugt überlappen sich die einander zugeordneten ersten und zweiten Nanostrukturen 7, 11 zumindest bereichsweise entlang einer bestimmten Richtung gesehen, wobei sie sich jedoch nicht berühren, sondern entlang derselben Richtung gesehen voneinander beabstandet sind.

Zwischen der ersten Anordnungslage 5 und dem Schaltmaterial 13 ist eine erste Schutzlage 15 angeordnet. Zwischen dem Schaltmaterial 13 und der zweiten Anordnungslage 9 ist eine zweite Schutzlage 17 angeordnet. Die Schutzlagen 15, 17 verhindern insbesondere eine Degradation oder Zersetzung des Schaltmaterials 13, insbesondere durch Umwelteinflüsse wie Oxidation, vorzugsweise aber auch durch Diffusion von Material der Nanostrukturen 7, 11 in das Schaltmaterial 13 hinein.

Die erste Nanostruktur 7 und die zweite Nanostruktur 11 sind hier jeweils in eine Deckschicht 19, 21 eingebettet. Dabei dienen die Deckschichten 19, 21 einerseits dem Schutz der Nanostrukturen 7, 11 und andererseits einer Planarisierung, insbesondere um einen definierten, planparallelen Schichtaufbau der Anordnungslagen 5, 9, der Schutzlagen 15, 17 und der bevorzugt schichtförmigen Lage des Schaltmaterials 13 zu ermöglichen.

Es ist aber auch ein Ausführungsbeispiel möglich, bei welchem das Schaltmaterial 13 nicht schichtförmig, sondern lokal begrenzt zwischen einander zugeordneten ersten und zweiten Nanostrukturen 7, 11, insbesondere in einem Überlappungsbereich zwischen einander zugeordneten ersten und zweiten Nanostrukturen 7, 11, in welchem sich diese überlappen, vorgesehen ist.

Die erste chirale Anordnung 3 ist auf einem Substrat 23 aufgebaut, welches zumindest in einem Peak-Wellenlängenbereich, in welchem die Vorrichtung 1 chirale optische Eigenschaften aufweist, transparent ist.

Vorzugsweise weisen die Nanostrukturen 7, 11 ein plasmonisches Material, vorzugsweise Gold, auf oder bestehen bevorzugt aus einem plasmonischen Material, vorzugsweise aus Gold. Auch Aluminium, Titannitrid oder dielektrische Materialien mit hohem Brechungsindex, die Mieresonanzen aufweisen können, kommen als Material für die Nanostrukturen infrage. Insbesondere sind die Nanostrukturen 7, 11 bevorzugt als Nanostäbe oder Nanodrähte ausgebildet, wobei anhand von Figur 1 deutlich wird, dass die als erster Nanostab ausgebildete, erste Nanostruktur 7 - in einer gedachten Ebene der chiralen Anordnung 3 gesehen - senkrecht zu der als zweitem Nanostab ausgebildeten, zweiten Nanostruktur 11 orientiert ist, wobei die Nanostäbe, mithin die Nanostrukturen 7, 11 in vertikaler Richtung versetzt zueinander angeordnet sind und - in Draufsicht gesehen - überlappende Enden 25, 27 aufweisen. Um dies deutlicher darstellen zu können, sind hier die Deckschichten 19, 21, die Schutzlagen 15, 17 und das Schaltmaterial 13 teilweise weggeschnitten, sodass die Nanostrukturen 7, 11 exponiert sind. Tatsächlich sind die Nanostrukturen 7, 11 bevorzugt vollständig in den Deckschichten 19, 21 eingebettet, wobei der in Figur 1 dargestellte Ausschnitt nicht vorhanden ist. Auch die Schutzlagen 15, 17 und das Schaltmaterial 13 erstrecken sich bevorzugt über die gesamte Fläche der Vorrichtung 1 und insbesondere des Substrats 23.

Die beiden Nanostrukturen 7, 11 bilden insbesondere ein plasmonisches Dimer vom Born-Kuhn-Typ.

Das Substrat 23 weist vorzugsweise Calciumfluorid ($CaF_2$) auf oder besteht aus Calciumfluorid. Für die Deckschichten 19, 21 wird vorzugsweise das Spin-on-Polymer PC403 gewählt.

Die Schutzlagen 15, 17 weisen vorzugsweise $ZnS/SiO_2$ auf oder bestehen aus diesem Material.

Das Schaltmaterial 13 weist vorzugsweise ein Phasenwechselmaterial auf oder besteht aus einem Phasenwechselmaterial, insbesondere eine Chalkogenid-Verbindung, ganz besonders bevorzugt $Ge_3Sb_2Te_6$, das auch als GST-326 bezeichnet wird.

Eine - senkrecht zu der gedachten Ebene gemessene - Dicke der ersten Anordnungslage 5 beträgt vorzugsweise 60 nm, eine Dicke der Schutzlagen 15, 17 beträgt vorzugsweise jeweils 10 nm, eine Dicke der Schicht des Schaltmaterials 13 beträgt vorzugsweise 50 nm, und eine Dicke der zweiten Anordnungslage 9 beträgt vorzugsweise 100 nm.

Bei einem bevorzugten Ausführungsbeispiel beträgt eine Länge der Nanostrukturen 7, 11 bevorzugt 660 nm, deren - in der gedachten Ebene gemessene - Breite beträgt bevorzugt 40 nm, und deren - senkrecht zu der gedachten Ebene gemessene - Dicke beträgt vorzugsweise 50 nm. In diesem Fall ist die Geometrie der Nanostrukturen 7, 11 insbesondere abgestimmt auf ein Transparenz-Fenster des Schaltmaterials 13, welches GST-326 aufweist.

Durch die Wahl der konkreten Geometrie der Nanostrukturen 7, 11 und des Transparenz-Fensters des Schaltmaterials 13, insbesondere durch entsprechende Abstimmung dieser Eigenschaften aufeinander, ist es möglich, eine chirale Antwort der Vorrichtung 1 und insbesondere eine Peak-Wellenlänge eines Zirkulardichroismus-Signals der Vorrichtung 1 über einen weiten Wellenlängenbereich abzustimmen. Dabei können insbesondere Peak-Wellenlängen im Gigahertz-Bereich, im Terahertz-Bereich, im Infrarot-Bereich, im sichtbaren Spektralbereich, und/oder im ultravioletten Bereich realisiert werden. Bei den zuvor beschriebenen geometrischen Ausgestaltungen und der Wahl des Schaltmaterials 13 als GST-326 liegt die Peak-Wellenlänge des Zirkulardichroismus-Signals der Vorrichtung 1 in dem ersten und in dem zweiten Schaltzustand des Schaltmaterials 13 im mittleren Infrarotbereich, insbesondere zwischen 4 $\mu$m und 5 $\mu$m.

Sowohl die erste Anordnungslage 5 als auch die zweite Anordnungslage 9 weisen vorzugsweise eine Mehrzahl, insbesondere eine Vielzahl von Nanostrukturen auf, die jeweils nach Art des in Figur 1 dargestellten Dimers relativ zueinander ausgerichtet sind. Dabei weist bevorzugt jedes Dimer dieselbe Händigkeit auf, sodass sich für die Vorrichtung 1 insgesamt eine eindeutige Händigkeit ergibt.

Es ist möglich, dass die Mehrzahl von Nanostrukturen periodisch entlang der gedachten Ebene der chiralen Anordnung 3 verteilt ist. Alternativ ist es möglich, dass diese aperiodisch, insbesondere leicht von ihrer gemäß einer periodischen Anordnung vorgesehenen Position verrückten Position angeordnet sind, um Rayleigh-Anomalien effizient zu unterdrücken. Besonders bevorzugt weist die chirale Anordnung 3 eine Mehrzahl von Superzellen, insbesondere eine Vielzahl von Superzellen auf. Eine Superzelle weist wiederum eine Mehrzahl chiraler Dimere auf. Die Mehrzahl von Superzellen ist periodisch oder aperiodisch entlang der gedachten Ebene der Vorrichtung 1 angeordnet.

**Figur 2** zeigt eine schematische Darstellung eines zum Verständnis der Erfindung nützlichen Beispiels einer solchen Superzelle 29, die acht Nanostrukturen aufweist, nämlich vier erste Nanostrukturen 7 in der ersten Anordnungslage 5, und vier relativ zu den ersten Nanostrukturen 7 ausgerichtete, zweite Nanostrukturen 11 in der zweiten Anordnungslage 9. Gleiche und funktionsgleiche Elemente sind mit gleichen Bezugszeichen versehen, sodass insofern auf die vorangegangene Beschreibung verwiesen wird. Dabei stellt Figur 2 eine schematische Draufsicht auf die gedachte Ebene E der chiralen Anordnung 3 dar, wobei die zweiten Nanostrukturen 11 mit durchgezogenen Linien dargestellt sind, um anzudeuten, dass diese in der dem Betrachter näher liegenden, zweiten Anordnungslage 9 angeordnet sind, wobei die ersten Nanostrukturen 7 mit strichlierten Linien dargestellt sind, um anzudeuten, dass diese in der unter der zweiten Anordnungslage 9 angeordneten, ersten Anordnungslage 5, die also vom Betrachter weiter entfernt in die Bildebene von Figur 2 hinein versetzt gelegen ist, angeordnet sind. Nicht dargestellt ist, dass zwischen der ersten Anordnungslage 5 und der zweiten Anordnungslage 9 das Schaltmaterial 13 angeordnet ist.

Die Superzelle 29 weist also in jeder der Anordnungslagen 5, 9 jeweils vier Nanostrukturen 7, 11 auf, die entlang der Kanten eines Rechtecks, hier eines Quadrats, angeordnet sind, wobei die vier Nanostrukturen 7 der ersten Anordnungslage 5 spiegelbildlich zu den vier Nanostrukturen 11 der zweiten Anordnungslage 9 angeordnet sind. Dabei erstreckt sich die Spiegelebene senkrecht zu den Anordnungslagen 5, 9 beziehungsweise zu der gedachten Ebene E der chiralen Anordnung 3. Es ist außerdem deutlich zu erkennen, dass jeweils eine erste Nanostruktur 7 und eine zweite Nanostruktur 11 als Nanostab ausgebildet sind, wobei jeweils ein erster Nanostab 8 der ersten Anordnungslage 5 - in der gedachten Ebene der chiralen Anordnung 3 gesehen - senkrecht zu einem zweiten Nanostab 12 der zweiten Anordnungslage 9 orientiert ist, wobei die Nanostäbe 8, 12 - in Figur 2 in Blickrichtung des Betrachters gesehen - vertikal versetzt zueinander angeordnet sind, wobei sie - in Draufsicht auf die Bildebene von Figur 2 gesehen - überlappende Enden 25, 27 aufweisen. Dabei ist ein Überlappungsbereich 31 hier jeweils schraffiert dargestellt.

Anhand von Figur 2 wird auch deutlich, dass jedes der plasmonischen Dimere der Superzelle 29 eine gleiche Händigkeit aufweist, sodass die Superzelle 29 insgesamt eine eindeutige Händigkeit aufweist. Die erste chirale Anordnung 3 weist vorzugsweise eine Vielzahl periodisch oder aperiodisch angeordneter Superzellen 29 auf, die allesamt eine identische Händigkeit aufweisen, wodurch auch die chirale Anordnung 3 insgesamt eine eindeutige Händigkeit aufweist.

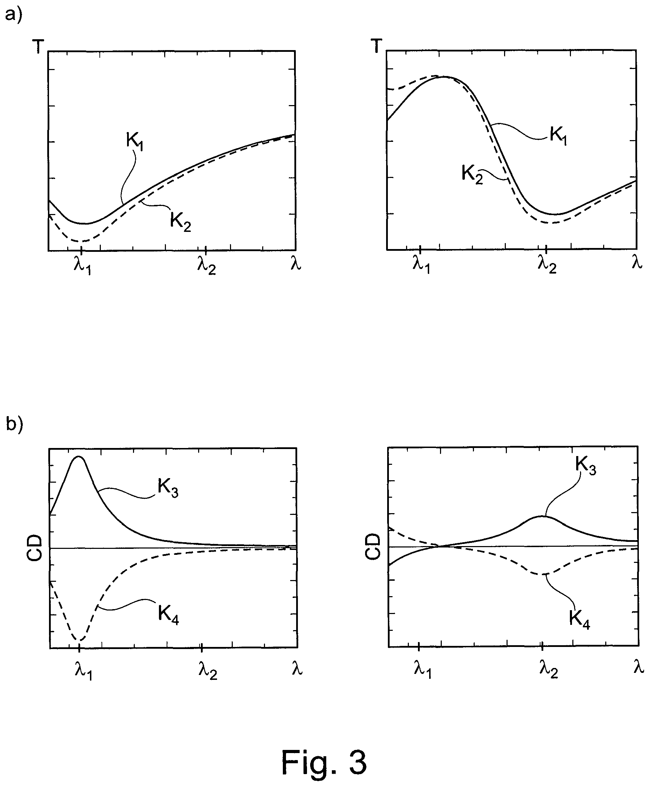

**Figur 3** zeigt eine schematische, diagrammatische Darstellung der Funktionsweise des zum Verständnis der Erfindung nützlichen Beispiels der Vorrichtung 1 gemäß den Figuren 1 und 2.

Dabei ist in Figur 3a) in zwei Diagrammen jeweils eine Transmission T der Vorrichtung 1 aufgetragen gegen eine Wellenlänge $\lambda$ dargestellt. Dabei zeigt das linke Diagramm das Verhalten der Vorrichtung 1 in dem ersten Schaltzustand des Schaltermaterials 13, wobei das rechte Diagramm das Verhalten der Vorrichtung 1 in dem zweiten Schaltzustand des Schaltmaterials 13 zeigt. Eine als durchgezogene Linie dargestellte, erste Kurve K1 zeigt jeweils die Transmission von rechtshändig zirkular polarisiertem Licht durch die Vorrichtung 1, wobei eine gestrichelt dargestellte, zweite Kurve K2 jeweils die Transmission von linkshändig zirkular polarisiertem Licht durch die Vorrichtung 1 darstellt.

Es zeigt sich, dass in dem ersten Schaltzustand des Schaltmaterials 13 für eine erste Peak-Wellenlänge $\lambda_1$ sowohl die Transmission für rechtshändig und linkshändig zirkular polarisiertes Licht am niedrigsten, also die Absorption am höchsten, und der Unterschied in der Transmission zwischen rechtshändig zirkular polarisiertem Licht einerseits und linkshändig zirkular polarisiertem Licht andererseits am größten ist. Damit ist die erste Peak-Wellenlänge $\lambda_1$ hier eine Peak-Wellenlänge der chiralen optischen Antwort der Vorrichtung 1.

Durch Schalten des Schaltmaterials 13 in den zweiten Schaltzustand, beispielsweise durch Phasenumwandlung eines als Phasenwechselmaterial ausgebildeten Schaltmaterials 13 von einem amorphen zu einem kristallinen Zustand, verändert sich die dielektrische Umgebung für die Nanostrukturen 7, 11, sodass sich die Peak-Wellenlänge der chiralen optischen Antwort der Vorrichtung 1 von der ersten Wellenlänge $\lambda_1$ zu einer zweiten Wellenlänge $\lambda_2$ verschiebt, was in dem rechten Diagramm von Figur 3a) dargestellt ist. In diesem zweiten Schaltzustand weist die Vorrichtung 1 bei der ersten Wellenlänge $\lambda_1$ keine nennenswerte Absorption und nur noch einen verschwindenden Zirkulardichroismus auf. Es ist demnach möglich, durch Schalten des Schaltmaterials 13 von dem ersten in den zweiten Schaltzustand - und zurück - die chirale optische Antwort der Vorrichtung 1 bei der ersten Wellenlänge $\lambda_1$ an- und auszuschalten. Das Schalten kann dabei bevorzugt thermisch, optisch und/oder elektrisch induziert werden. Dabei sind insbesondere bei elektrischer und/oder optischer Schaltung sehr kurze Schaltzeiten von wenigen Femtosekunden oder wenigen Pikosekunden möglich.

Figur 3b) zeigt Zirkulardichroismus-Signale CD der Vorrichtung 1 aufgetragen gegen die Wellenlänge $\lambda$. Die Zirkulardichroismus-Signale CD werden aus den in Figur 3a) dargestellten Transmissionsspektren vorzugsweise mit der oben angegebenen Gleichung (1) berechnet.

Eine dritte, durchgezogene Kurve K3 stellt jeweils das Zirkulardichroismus-Signal für eine rechtshändige chirale Anordnung 3 dar, wobei eine vierte, gestrichelte Kurve K4 das Zirkulardichroismus-Signal für eine linkshändige chirale Anordnung 3 darstellt. Dabei sind die rechtshändige chirale Anordnung und die linkshändige chirale Anordnung im Verhältnis zueinander Enantiomere. Insbesondere weisen bevorzugt die chiralen Dimere, besonders bevorzugt die Superzellen 29 der linkshändigen chiralen Anordnung die spiegelbildliche Konfiguration zu den chiralen Dimeren, insbesondere den Superzellen 29 der rechtshändigen chiralen Anordnung auf.

Es zeigt sich, dass in dem ersten Schaltzustand, welcher dem linken Diagramm entspricht, das Zirkulardichroismus-Signal CD der Vorrichtung 1 bei der ersten Wellenlänge $\lambda_1$ maximal ist, wobei es bei einem Schalten in den zweiten Schaltzustand, welcher dem rechten Diagramm zugeordnet ist, bei der ersten Wellenlänge $\lambda_1$ quasi verschwindet, wobei es hier bei der zweiten Wellenlänge $\lambda_2$ maximal - allerdings mit kleinerer Amplitude - ist. Auch anhand von Figur 3b) zeigt sich also, dass die chirale optische Antwort der Vorrichtung 1 durch Schalten des Schaltmaterials 13 von dem ersten Schaltzustand in den zweiten Schaltzustand und zurück bei der ersten Wellenlänge $\lambda_1$ an- und ausgeschaltet

werden kann.

Die spektrale Lage der beiden Wellenlängen $\lambda_1$ und $\lambda_2$ unterscheidet sich dabei hinreichend, sodass sich nicht etwa ein Ausläufer des Signals bei der zweiten Wellenlänge $\lambda_2$ in dem zweiten Schaltzustand störend an der spektralen Position der ersten Wellenlänge $\lambda_1$ auswirkt. Insbesondere erfolgt bevorzugt beim Schalten des Schaltmaterials 13 von dem ersten Schaltzustand in den zweiten Schaltzustand eine Rotverschiebung des Zirkulardichroismus-Signals um ungefähr 20 %.

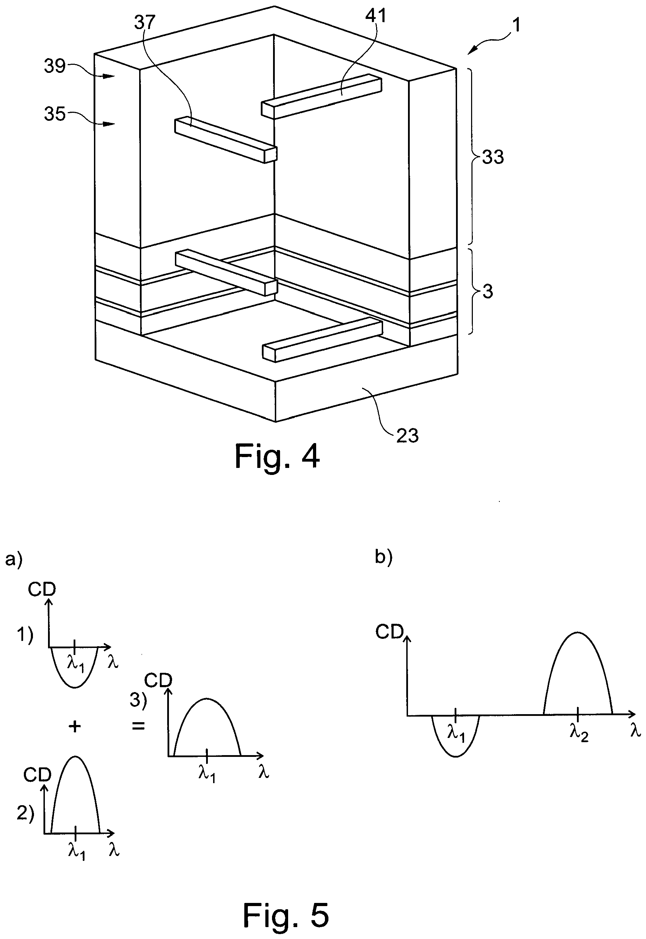

**Figur 4** zeigt eine schematische Darstellung - analog zu der Darstellung gemäß Figur 1 - eines erfindungsgemäßen ersten Ausführungsbeispiels der Vorrichtung 1. Gleiche und funktionsgleiche Elemente sind mit gleichen Bezugszeichen versehen, sodass insofern auf die vorangegangene Beschreibung verwiesen wird. Dabei ist hier auf der ersten chiralen Anordnung 3 eine zweite chirale Anordnung 33 angeordnet. Diese ist frei von einem Schaltmaterial, weist also insbesondere kein Schaltmaterial auf. Insoweit ist die erste chirale Anordnung 3 bevorzugt als aktive chirale Anordnung ausgebildet, wobei die zweite chirale Anordnung 33 bevorzugt als passive chirale Anordnung ausgebildet ist. Ein vertikaler Abstand der ersten chiralen Anordnung 3 und der zweiten chiralen Anordnung 33 ist vorzugsweise so gewählt, dass keine Nahfeld-Kopplung zwischen den beiden chiralen Anordnungen 3, 33 stattfindet. Insbesondere beträgt der Abstand zwischen der ersten chiralen Anordnung 3 und der zweiten chiralen Anordnung 33 vorzugsweise mindestens 200 nm.

Die zweite chirale Anordnung weist eine erste Anordnungslage 35 mit einer ersten Nanostruktur 37 sowie eine darüber angeordnete, zweite Anordnungslage 39 mit einer zweiten Nanostruktur 41 auf. Die Nanostrukturen 37, 41 sind jeweils in Deckschichten eingebettet, wobei jedoch die erste Anordnungslage 35 und die zweite Anordnungslage 39 - anders als bei der ersten chiralen Anordnung 3 - direkt und unmittelbar aneinander angrenzend übereinander angeordnet sind, ohne dass dazwischen Schutzlagen 15, 17 und ein Schaltmaterial 13 angeordnet wären. Im Übrigen ist die zweite chirale Anordnung 33 bevorzugt gleich ausgebildet wie die erste chirale Anordnung 3, wobei sie insbesondere chirale optische Eigenschaften, insbesondere ein Zirkulardichroismus-Signal, bei einer gleichen Peak-Wellenlänge $\lambda_1$, wie die erste chirale Anordnung 3 im ersten Schaltzustand des Schaltmaterials 13 aufweist, wobei sie allerdings im Vergleich zu der ersten chiralen Anordnung 3 eine umgekehrte Händigkeit aufweist, und wobei das Zirkulardichroismus-Signal der zweiten chiralen Anordnung 33 im Vergleich zu dem Zirkulardichroismus-Signal der ersten chiralen Anordnung 3 ein invertiertes Vorzeichen und eine halbe Amplitude aufweist.

Die umgekehrte Händigkeit der zweiten chiralen Anordnung 33 relativ zu der ersten chiralen Anordnung 3 wird insbesondere durch Spiegelung der chiralen Dimere, insbesondere durch Spiegelung der Superzellen der chiralen Anordnung 33 relativ zu der ersten chiralen Anordnung 3 erreicht. Die Abstimmung der chiralen Antwort auf eine gleiche Wellenlänge bei durch das fehlende Schaltmaterial 13 verschiedener dielektrischer Umgebung wird bevorzugt durch Anpassung der Geometrie, insbesondere der Länge, der Nanostrukturen 37, 41 erreicht. Vorzugsweise wird durch entsprechende geometrische Abstimmung eines vertikalen Abstands der Nanostrukturen 37, 41 erreicht, dass das Zirkulardichroismus-Signal der zweiten chiralen Anordnung 33 eine halbe Amplitude im Vergleich zu dem Zirkulardichroismus-Signal der ersten chiralen Anordnung 3 aufweist. Das invertierte Vorzeichen des Zirkulardichroismus-Signals ergibt sich aus der umgekehrten Händigkeit der zweiten chiralen Anordnung 33 relativ zu der ersten chiralen Anordnung 3.

Ist also beispielsweise die erste chirale Anordnung 3 rechtshändig ausgebildet, ist die zweite chirale Anordnung 33 linkshändig ausgebildet, und umgekehrt.

**Figur 5** dient der näheren Erläuterung der Funktionsweise der Vorrichtung 1 gemäß Figur 4:

Dabei zeigt Figur 5a) eine erste, schematische und diagrammatische Darstellung, wobei in einem ersten Diagramm 1) das Zirkulardichroismus-Signal CD der zweiten chiralen Anordnung 33 für sich genommen aufgetragen ist gegen die Wellenlänge $\lambda$, und wobei in einem zweiten Diagramm 2) das Zirkulardichroismus-Signal CD der ersten chiralen Anordnung 3 aufgetragen gegen die Wellenlänge $\lambda$ für sich genommen dargestellt sind. Beide Zirkulardichroismus-Signale CD liegen in dem ersten Schaltzustand des Schaltmaterials 13 bei der ersten Peak-Wellenlänge $\lambda_1$, wobei das Zirkulardichroismus-Signal CD der zweiten chiralen Anordnung 33 ein umgekehrtes Vorzeichen mit halber Amplitude im Vergleich zu dem Zirkulardichroismus-Signal CD der ersten chiralen Anordnung 3 aufweist. In einem dritten Diagramm 3) ist das Zirkulardichroismus-Signal CD der gesamten Vorrichtung 1 aufgetragen gegen die Wellenlänge $\lambda$ dargestellt, wobei sich dieses Signal als Summe aus den beiden Zirkulardichroismus-Signalen CD der chiralen Anordnungen 3, 33 ergibt. Dieses Zirkulardichroismus-Signal CD der gesamten Vorrichtung 1 weist daher im Vergleich zu dem Zirkulardichroismus-Signal CD der ersten chiralen Anordnung 3 eine halbe Amplitude bei gleichem Vorzeichen auf.

In Figur 5b) ist nun das Zirkulardichroismus-Signal CD der Vorrichtung 1 gemäß Figur 4 in dem zweiten Schaltzustand des Schaltmaterials 13 dargestellt. Dabei zeigt sich, dass durch das Schalten des Schaltmaterials 13 das Zirkulardichroismus-Signal der ersten chiralen Anordnung 3 - wie zuvor in Zusammenhang mit Figur 3 erläutert - zu der zweiten Peak-Wellenlänge $\lambda_2$ verschoben wird. Dadurch weist die erste chirale Anordnung 3 bei der ersten Wellenlänge $\lambda_1$ keine chirale optische Antwort mehr auf, sodass quasi die chirale optische Antwort der zweiten chiralen Anordnung 33 exponiert wird. Es resultiert daher für gesamte Vorrichtung 1 in dem zweiten Schaltzustand bei der ersten Peak-Wellenlänge $\lambda_1$ ein Zirkulardichroismus-Signal, welches genau dem Zirkulardichroismus-Signal der zweiten chiralen Anordnung 33 entspricht, also im Vergleich zu dem Zirkulardichroismus-Signal der ersten chiralen Anordnung 3 eine halbe Amplitude bei umgekehrtem Vorzeichen aufweist.

Vergleicht man nun das dritte Diagramm 3) von Figur 5a) mit dem Diagramm von Figur 5b), so zeigt sich, dass die Vorrichtung 1 insgesamt in dem zweiten Schaltzustand ein invertiertes Zirkulardichroismus-Signal bei der ersten Wellenlänge $\lambda_1$, mit umgekehrtem Vorzeichen aber gleicher Amplitude aufweist. Somit kann bei der ersten Wellenlänge $\lambda_1$ durch Schalten des Schaltmaterials 13 von dem ersten Schaltzustand in den zweiten Schaltzustand - und zurück - das Zirkulardichroismus-Signal der Vorrichtung 1 bei konstanter Amplitude invertiert werden. Somit kann die chirale Wirkung der Vorrichtung 1 bei der ersten Wellenlänge $\lambda_1$ nicht einfach - wie bei dem ersten Ausführungsbeispiel - ein- und ausgestaltet werden, sondern es kann bei dem zweiten Ausführungsbeispiel sogar zwischen einer linkshändigen und einer rechtshändigen Wirkung der Vorrichtung 1 bei der ersten Peak-Wellenlänge $\lambda_1$ umgeschaltet werden.

Somit ist eine aktive Kontrolle über die Händigkeit des durch die Vorrichtung 1 bereitgestellten, chiralen Metamaterials möglich, und dies insbesondere bei sehr schnellen Schaltzeiten von beispielsweise optisch wenigen Femtosekunden und elektrisch wenigen Pikosekunden. Weiterhin zeigt sich, dass die Vorrichtung 1 über weite Wellenlängenbereiche hin abstimmbar ist. Sie ist außerdem sehr robust und als Schichtsystem sehr kompakt aufgebaut, wobei sie keinerlei freistehende oder sich bewegende Teile für ihre Funktion benötigt.

## Patentansprüche

1. Vorrichtung (1) mit schaltbaren, chiralen optischen Eigenschaften, mit

   - einer ersten chiralen Anordnung (3), die
   - eine erste Anordnungslage (5) mit wenigstens einer ersten Nanostruktur (7), und
   - eine zweite Anordnungslage (9) mit wenigstens einer zweiten Nanostruktur (11) aufweist, wobei
   - die erste Nanostruktur (7) und die zweite Nanostruktur (11) so relativ zueinander angeordnet sind, dass die chirale Anordnung (3) chiral ausgebildet ist, wobei
   - zwischen der ersten Anordnungslage (5) und der zweiten Anordnungslage (9) ein Schaltmaterial (13) mit schaltbaren dielektrischen Eigenschaften angeordnet ist,
   **dadurch gekennzeichnet, dass**
   - auf der ersten chiralen Anordnung (3) eine zweite chirale Anordnung (33) angeordnet ist, die frei ist von einem Schaltmaterial.

2. Vorrichtung (1) nach Anspruch 1, **dadurch gekennzeichnet, dass** das Schaltmaterial - vorzugsweise reversibel - zwischen einem ersten Schaltzustand, in welchem eine Dielektrizitätskonstante des Schaltmaterials (13) einen ersten Wert aufweist, und in einem zweiten Schaltzustand, in welchem die Dielektrizitätskonstante des Schaltmaterials (13) einen zweiten, von dem ersten Wert verschiedenen Wert aufweist, schaltbar ist, wobei ein Übergang zwischen dem ersten Schaltzustand und dem zweiten Schaltzustand vorzugsweise thermisch, optisch und/oder elektrisch induzierbar ist.

3. Vorrichtung (1) nach einem der vorhergehenden Ansprüche, **dadurch gekennzeichnet, dass** zwischen der ersten Anordnungslage (5) und dem Schaltmaterial (13) und/oder zwischen dem Schaltmaterial (13) und der zweiten Anordnungslage (9) eine Schutzlage (15,17) angeordnet ist.

4. Vorrichtung (1) nach einem der vorhergehenden Ansprüche, **dadurch gekennzeichnet, dass** die erste und die zweite Anordnungslage (5,9) eine Mehrzahl von periodisch oder aperiodisch angeordneten Nanostrukturen (7,11) aufweisen.

5. Vorrichtung (1) nach einem der vorhergehenden Ansprüche, **dadurch gekennzeichnet, dass** wenigstens eine Nanostruktur (7,11) der ersten Anordnungslage (5) und/oder der zweiten Anordnungslage (9) in eine Deckschicht (19,21) eingebettet ist/sind.

6. Vorrichtung (1) nach einem der vorhergehenden Ansprüche, **dadurch gekennzeichnet, dass** das Schaltmaterial (13) als Phasenwechselmaterial ausgebildet ist, wobei der erste Schaltzustand einer ersten Phase und der zweite Schaltzustand einer zweiten Phase des Phasenwechselmaterials zugeordnet ist.

7. Vorrichtung (1) nach einem der vorhergehenden Ansprüche, **dadurch gekennzeichnet, dass** die wenigstens eine erste Nanostruktur (7) und/oder die wenigstens eine zweite Nanostruktur (11) als Nanostab (8,12) ausgebildet ist/sind, wobei bevorzugt ein erster Nanostab (8) der ersten Anordnungslage (5) - in einer gedachten Ebene der chiralen Anordnung (3) gesehen - senkrecht zu einem zweiten Nanostab (12) der zweiten Anordnungslage (9)

orientiert ist, wobei die Nanostäbe (8,12) vertikal versetzt zueinander angeordnet sind und - in Draufsicht gesehen - überlappende Enden (25,27) aufweisen.

8. Vorrichtung (1) nach einem der vorhergehenden Ansprüche, **dadurch gekennzeichnet, dass** die chirale Anordnung (3) eine Superzelle (29) von acht Nanostäben (8,12) aufweist, wobei die Superzelle (29) in jeder Anordnungslage (5,9) vier Nanostäbe (8,12) aufweist, die entlang der Kanten eines Rechtecks angeordnet sind, wobei die vier Nanostäbe (8) der ersten Anordnungslage (5) spiegelbildlich zu den vier Nanostäben (12) der zweiten Anordnungslage (9) angeordnet sind, wobei sich die Spiegelebene senkrecht zu den Anordnungslagen (5,9) erstreckt.

9. Vorrichtung (1) nach einem der vorhergehenden Ansprüche, **dadurch gekennzeichnet, dass** die zweite chirale Anordnung (33) so ausgebildet ist, dass sie

   - chirale optische Eigenschaften bei einer gleichen Wellenlänge aufweist wie die erste chirale Anordnung (3), wobei sie
   - im Vergleich zu der ersten chiralen Anordnung (3) eine umgekehrte Händigkeit aufweist, wobei sie
   - im Vergleich zu der ersten chiralen Anordnung (3) ein Zirkulardichroismus-Signal mit invertiertem Vorzeichen und halber Amplitude aufweist.

10. Vorrichtung (1) nach einem der vorhergehenden Ansprüche, **dadurch gekennzeichnet, dass** die erste chirale Anordnung (3) auf einem Substrat (23) aufgebaut ist, wobei das Substrat (23) zumindest in einem vorbestimmten Wellenlängenbereich transparent ist.

11. Vorrichtung (1) nach einem der vorhergehenden Ansprüche, **dadurch gekennzeichnet, dass** die erste chirale Anordnung (3) ein Zirkulardichroismus-Signal bei einer Wellenlänge im Gigahertz-Bereich, im Terahertz-Bereich, im Infrarot-Bereich, im sichtbaren Bereich, und/oder im Ultraviolett-Bereich, aufweist.

12. Vorrichtung (1) nach einem der vorhergehenden Ansprüche, **dadurch gekennzeichnet, dass** die erste chirale Anordnung (3) ein Zirkulardichroismus-Signal im mittleren Infrarot-Bereich, insbesondere in einem Wellenlängenbereich von mindestens 4 $\mu$m bis höchstens 5 $\mu$m, vorzugsweise von mindestens 4,15 $\mu$m bis höchstens 4,9 $\mu$m, aufweist.

13. Einrichtung zur Polarisationsmodulation, mit einer Vorrichtung (1) nach einem der vorhergehenden Ansprüche.

14. Verwendung einer Vorrichtung (1) nach einem der Ansprüche 1 bis 12, oder einer Einrichtung nach Anspruch 13, zur thermischen Bildgebung, zur polarisations-sensitiven Detektion, und/oder zur Stereo-Bildgebung.


**Claims**

1. A device (1) with switchable, chiral optical characteristics, with

   - a first chiral arrangement (3) having
   - a first arrangement layer (5) with at least one first nanostructure (7), and
   - a second arrangement layer (9) with at least one second nanostructure (11), wherein
   - the first nanostructure (7) and the second nanostructure (11) are arranged relative to one another such that the chiral arrangement (3) is chirally embodied, and wherein
   - a switching material (13) with switchable dielectric characteristics is arranged between the first arrangement layer (5) and the second arrangement layer (9)
   **characterised in that**
   - a second chiral arrangement (33) is arranged on the first chiral arrangement (3) wherein the second chiral arrangement (33) is free of switching material.

2. The device (1) according to claim 1, **characterised in that** the switching material can be switched - preferably reversibly - between a first switching state in which a dielectric constant of the switching material (13) has a first value and a second switching state in which the dielectric constant of the switching material (13) has a second value that is different from the first value, wherein a transition between the first switching state and the second switching state can preferably be induced thermally, optically and/or electrically.

3. The device (1) according to any one of the preceding claims, **characterised in that** a protective layer (15, 17) is arranged between the first arrangement layer (5) and the switching material (13) and/or between the switching material (13) and the second arrangement layer (9).

4. The device (1) according to any one of the preceding claims, **characterised in that** the first and the second arrangement layer (5, 9) have a plurality of periodically or aperiodically arranged nanostructures (7, 11).

5. The device (1) according to any one of the preceding claims, **characterised in that** at least one nanostructure (7, 11) of the first arrangement layer (5) and/or of the second arrangement layer (9) is/are embedded in a covering layer (19, 21).

6. The device (1) according to any one of the preceding claims, **characterised in that** the switching material (13) is embodied as a phase change material, the first switching state being associated with a first phase and the second switching state being associated with a second phase of the phase change material.

7. The device (1) according to any one of the preceding claims, **characterised in that** the at least one first nanostructure (7) and/or the at least one second nanostructure (11) is embodied as a nanorod (8, 12), wherein preferably a first nanorod (8) of the first arrangement layer (5) is oriented perpendicular to a second nanorod (12) of the second arrangement layer (9) when seen on an imaginary plane of the chiral arrangement (3), and wherein the nanorods (8, 12) are arranged so as to be vertically offset with respect to one another and have overlapping ends (25, 27) when viewed from above.

8. The device (1) according to any one of the preceding claims, **characterised in that** the chiral arrangement (3) has a supercell of eight nanorods (8, 12), wherein the supercell (29) has four nanorods (8, 12) in each arrangement layer (5, 9) that are arranged along the edges of a rectangle, the four nanorods (8) of the first arrangement layer (5) being arranged in mirror symmetry to the four nanorods (12) of the second arrangement layer (9), with the mirror plane extending perpendicular to the arrangement layers (5, 9).

9. The device (1) according to any one of the preceding claims, **characterised in that** the second chiral arrangement (33) is embodied such that it

- has chiral optical characteristics at the same wavelength as the first chiral arrangement (3), wherein
- it has a reversed chirality in comparison to the first chiral arrangement (3), wherein
- it has a circular dichroism signal with inverted sign and half amplitude in comparison to the first chiral arrangement (3).

10. The device (1) according to any one of the preceding claims, **characterised in that** the first chiral arrangement (3) is built on a substrate (23), the substrate (23) being transparent in at least one predetermined wavelength range.

11. The device (1) according to any one of the preceding claims, **characterised in that** the first chiral arrangement (3) has a circular dichroism signal at a wavelength in the gigahertz range, in the terahertz range, in the infrared range, in the visible range, and/or in the ultraviolet range.

12. The device (1) according to any one of the preceding claims, **characterised in that** the first chiral arrangement (3) has a circular dichroism signal in the middle infrared range, particularly in a wavelength range from at least 4 $\mu$m to no more than 5 $\mu$m, preferably from at least 4.15 $\mu$m to no more than 4.9 $\mu$m.

13. An installation for polarization modulation, with a device (1) according to any one of the preceding claims.

14. A use of a device (1) according to any one of claims 1 to 12, or of an installation according to claim 13, for thermal imaging, for polarization-sensitive detection, and/or for stereo imaging.

**Revendications**

1. Dispositif (1) avec des propriétés optiques chirales commutables, comportant :

- un premier agencement chiral (3), qui présente

- une première couche d'agencement (5) avec au moins une première nanostructure (7), et
- une seconde couche d'agencement (9) avec au moins une seconde nanostructure (11), dans lequel
- la première nanostructure (7) et la seconde nanostructure (11) sont disposées l'une par rapport à l'autre de telle sorte que l'agencement chiral (3) est configuré de manière chirale, dans lequel
- entre la première couche d'agencement (5) et la seconde couche d'agencement (9), un matériau de commutation (13) avec des propriétés diélectriques commutables est disposé,
**caractérisé en ce que**
- sur le premier agencement chiral (3), un second agencement chiral (33) est disposé et est libre de tout matériau de commutation.

2. Dispositif (1) selon la revendication 1, **caractérisé en ce que** le matériau de commutation - de préférence réversible - est commutable entre un premier état de commutation, dans lequel une constante diélectrique du matériau de commutation (13) présente une première valeur, et dans un second état de commutation, dans lequel la constante diélectrique du matériau de commutation (13) présente une seconde valeur différente de la première valeur, dans lequel une transition entre le premier état de commutation et le second état de commutation peut être induite de préférence thermiquement, optiquement et/ou électriquement.

3. Dispositif (1) selon une des revendications précédentes, **caractérisé en ce que**, entre la première couche d'agencement (5) et le matériau de commutation (13) et/ou entre le matériau de commutation (13) et la seconde couche d'agencement (9), une couche de protection (15, 17) est disposée.

4. Dispositif (1) selon une des revendications précédentes, **caractérisé en ce que** la première et la seconde couche d'agencement (5, 9) présentent une pluralité de nanostructures (7, 11) disposées de manière périodique ou apériodique.

5. Dispositif (1) selon une des revendications précédentes, **caractérisé en ce qu'**au moins une nanostructure (7, 11) de la première couche d'agencement (5) et/ou de la seconde couche d'agencement (9) est/sont intégrée(s) dans une couche couvrante (19, 21).

6. Dispositif (1) selon une des revendications précédentes, **caractérisé en ce que** le matériau de commutation (13) est configuré sous la forme d'un matériau à changement de phase, le premier état de commutation étant associé à une première phase et le second état de commutation à une seconde phase du matériau à changement de phase.

7. Dispositif (1) selon une des revendications précédentes, **caractérisé en ce que** l'au moins une première nanostructure (7) et/ou l'au moins une seconde nanostructure (11) est/sont configurée(s) sous la forme d'une nanobarre (8, 12), dans lequel de préférence une première nanobarre (8) de la première couche d'agencement (5) - vu dans un plan imaginaire de l'agencement chiral (3) - est orientée perpendiculairement à une seconde nanobarre (12) de la seconde couche d'agencement (9), les nanobarres (8, 12) étant disposées décalées verticalement l'une par rapport à l'autre et - en vue de dessus - présentent des extrémités en chevauchement (25, 27).

8. Dispositif (1) selon une des revendications précédentes, **caractérisé en ce que** l'agencement chiral (3) présente une supercellule (29) de huit nanobarres (8,12), la supercellule (29) présentant dans chaque couche d'agencement (5, 9) quatre nanobarres (8, 12) qui sont disposées le long des bords d'un rectangle, les quatre nanobarres (8) de la première couche d'agencement (5) étant disposées en miroir par rapport aux quatre nanobarres (12) de la seconde couche d'agencement (9), dans lequel le plan miroir s'étend perpendiculairement aux couches d'agencement (5, 9).

9. Dispositif (1) selon une des revendications précédentes, **caractérisé en ce que** le second agencement chiral (33) est configuré de telle sorte qu'il

- présente des propriétés optiques chirales pour une longueur d'onde identique au premier agencement chiral (3), dans lequel il
- présente une chiralité inversée par rapport au premier agencement chiral (3), dans lequel il
- présente un signal de dichroïsme circulaire avec un signe inversé et une amplitude de moitié par rapport au premier agencement chiral (3).

10. Dispositif (1) selon une des revendications précédentes, **caractérisé en ce que** le premier agencement chiral (3) est constitué sur un substrat (23), dans lequel le substrat (23) est transparent au moins dans un domaine de longueurs d'onde prédéfini.

**11.** Dispositif (1) selon une des revendications précédentes, **caractérisé en ce que** le premier agencement chiral (3) présente un signal de dichroïsme circulaire pour une longueur d'onde dans le domaine des gigahertz, dans le domaine des térahertz, dans le domaine infra-rouge, dans le domaine visible, et/ou dans le domaine ultraviolet.

**12.** Dispositif (1) selon une des revendications précédentes, **caractérisé en ce que** le premier agencement chiral (3) présente un signal de dichroïsme circulaire dans le domaine infrarouge moyen, en particulier dans un domaine de longueurs d'ondes d'au moins 4 $\mu$m jusqu'au maximum 5 $\mu$m, de préférence d'au moins 4,15 $\mu$m jusqu'au maximum 4,9 $\mu$m.

**13.** Installation de modulation de polarisation, comprenant un dispositif (1) selon une des revendications précédentes.

**14.** Utilisation d'un dispositif (1) selon une des revendications 1 à 12, ou d'une installation selon la revendication 13, destiné(e) à l'imagerie thermique, à la détection sensible à la polarisation, et/ou à l'imagerie stéréo.

Fig. 1

E

Fig. 2

a)

b)

# Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KUZYK, A. ; SCHREIBER, R. ; ZHANG, H. ; GOVOROV, A.O. ; LIEDL, T. ; LIU, N.** *Nat. Mater.,* 2014
- **ZHANG, S. ; ZHOU, J. ; PARK, Y.-S. ; RHO, J. ; SINGH, R. ; NAM, S. ; AZAD, A.K. ; CHEN, H.-T. ; YIN, X. ; TAYLOR, A.J.** *Nat Commun.,* 2012, vol. 3, 942

- **YIN, X. ; SCHÄFERLING, M. ; METZGER, B. ; GIESSEN, H.** *Nano Lett.,* 2013, vol. 13, 6238-6243
- **AUGUIÉ, B. ; LORENZO ALONSO-GOMEZ, J. ; GUERRERO-MARTÍNEZ, A. ; LIZ-MARZÁN, L.M.** *J Phys Chem Lett,* 2011, vol. 2, 846-851
- **SVIRKO, Y ; ZHELUDEV, N. ; OSIPOV, M.** *Applied Physics Letters,* 2001, vol. 78, 498-498